# EUROPEAN PATENT APPLICATION

(11) **EP 4 775 551 A1**
(43) Date of publication of application: **15.07.2026**
(21) Application number: 24862469.4
(22) Date of filing: 30.07.2024
(51) Int. Cl.: C03C 1/02, B09B 3/35, B09B 3/40, C03B 1/00, C03B 3/02, C03C 3/078, C03C 3/087, B09B 101/50

(54) **METHOD FOR PRODUCING GLASS, MIXTURE, DRIED PRODUCT, AND GLASS**

(30) Priority: 08.09.2023 JP 2023146355; 30.11.2023 JP 2023202908
(71) Applicant: AGC Inc., Chiyoda-ku Tokyo 100-8405 (JP)
(72) Inventor: WADA Naoya, Tokyo 100-8405 (JP)
(74) Representative: Müller-Boré & Partner Patentanwälte PartG mbB
(86) International application number: PCT/JP2024/027135
(87) International publication number: WO 2025/052815

(57) **Abstract**

The present invention relates to a method for producing glass that includes: obtaining a mixture comprising a glass powder containing at least one heavy metal oxide selected from Sb₂O₃, PbO, and As₂O₃, a reducing agent, and a liquid medium, where the reducing agent is dissolved in the liquid medium; and heating the mixture at a temperature of 700°C or higher.

## Description

### TECHNICAL FIELD

The present invention relates to a method for producing a glass, a mixture, a dried product, and a glass.

### BACKGROUND ART

Generally, a large amount of CO₂ is discharged during glass production, and this is mainly due to combustion of heavy oil in melting of glass raw materials and decomposition of carbonate raw materials. Therefore, in order to reduce a discharge amount of CO₂ during glass production, it is useful to produce a glass by reusing glass cullet.

As the reuse of glass cullet, for example, Patent Literature 1 discloses a glass recycling method capable of improving the value of cullet of a non-crystallized glass to be reused. Further, for example, Patent Literature 2 discloses a glass plate reprocessing method and a solar cell panel recycling method for effectively reusing a glass plate such as a tempered glass substrate used for a solar cell panel.

### CITATION LIST

### PATENT LITERATURE

Patent Literature 1: JP2021-109122A
Patent Literature 2: JP2021-151634A

### SUMMARY OF INVENTION

### TECHNICAL PROBLEM

Examples of the glass cullet include PV cullet obtained by crushing a solar panel as described in the above document. Currently, most of the PV cullet is buried, so that there is a strong social demand for reusing the PV cullet. However, since a heavy metal oxide such as Sb₂O₃ is added to the PV cullet in order to adjust Fe-Redox (oxidation-reduction state of Fe), there is a problem that coloring or white haze is caused by reducing a glass containing the heavy metal oxide through a float process. In order to solve such a problem, it is necessary to reduce an amount of the heavy metal oxide such as Sb₂O₃ contained in the glass, but such a method has not been sufficiently studied.

The present invention has been made in view of such circumstances, and an object of the present invention is to provide a method for producing a glass capable of reducing an amount of a heavy metal oxide such as Sb₂O₃ when producing a new glass using a glass containing the heavy metal oxide.

### SOLUTION TO PROBLEM

As a result of intensive studies, the present inventors have found that, an amount of the heavy metal oxide in a glass to be obtained can be reduced by heating the mixture that contains a reducing agent, a liquid medium, and a glass powder containing a heavy metal oxide such as Sb₂O₃ in a state in which the reducing agent is dissolved in the liquid medium in the mixture, and have completed the present invention.

That is, an aspect of the present invention relates to a method for producing a glass, the method including: obtaining a mixture; and heating the mixture at a temperature of 700°C or higher, in which the mixture contains a glass powder containing at least one heavy metal oxide selected from the group consisting of Sb₂O₃, PbO, and As₂O₃, a reducing agent, and a liquid medium, and the reducing agent is dissolved in the liquid medium.

In addition, another aspect of the present invention relates to a method for producing a glass, the method including: obtaining a mixture; drying the mixture to obtain a dried product; and heating the dried product at a temperature of 700°C or higher, in which the mixture contains a glass powder containing at least one heavy metal oxide selected from the group consisting of Sb₂O₃, PbO, and As₂O₃, a reducing agent, and a liquid medium, the reducing agent is dissolved in the liquid medium, and the dried product contains the reducing agent and the glass powder containing the heavy metal oxide.

In addition, another aspect of the present invention relates to a method for producing a glass, the method including: obtaining a mixture; drying the mixture to obtain a dried product; mixing the dried product with a halogenating agent; and heating the resulting mixture at a temperature of 700°C or higher, in which the mixture contains a glass powder containing at least one heavy metal oxide selected from the group consisting of Sb₂O₃, PbO, and As₂O₃, a reducing agent, and a liquid medium, the reducing agent is dissolved in the liquid medium, and the dried product contains the reducing agent and the glass powder containing the heavy metal oxide.

In addition, another aspect of the present invention relates to a mixture including: a glass powder containing at least one heavy metal oxide selected from the group consisting of Sb₂O₃, PbO, and As₂O₃, a reducing agent, and a liquid medium, in which the reducing agent is dissolved in the liquid medium.

In addition, another aspect of the present invention relates to a dried product obtained by drying a mixture, in which the mixture contains a glass powder containing at least one heavy metal oxide selected from the group consisting of Sb₂O₃, PbO, and As₂O₃, a reducing agent, and a liquid medium, and the reducing agent is dissolved in the liquid medium, and the dried product contains the glass powder and the reducing agent.

In addition, another aspect of the present invention relates to a glass, in which the glass contains, in terms of mass% based on an oxide, 60% to 80% of SiO₂, 5% to 20% of Na₂O, 0% to 15% of MgO, 5% to 20% of CaO, 0% to 10% of Al₂O₃, 0.001% to 0.15% of a heavy metal oxide, and 0.005% to 3% of a halogen element, the content of the heavy metal oxide means a total amount of Sb₂O₃, PbO, and As₂O₃, and the content of the halogen element means a total amount of F, Cl, and Br.

### ADVANTAGEOUS EFFECTS OF INVENTION

According to the present invention, when a new glass is produced using a glass containing a heavy metal oxide such as Sb₂O₃, an amount of the heavy metal oxide can be reduced. Accordingly, occurrence of coloring and white haze due to the heavy metal oxide may be prevented in a glass to be obtained.

### BRIEF DESCRIPTION OF DRAWINGS

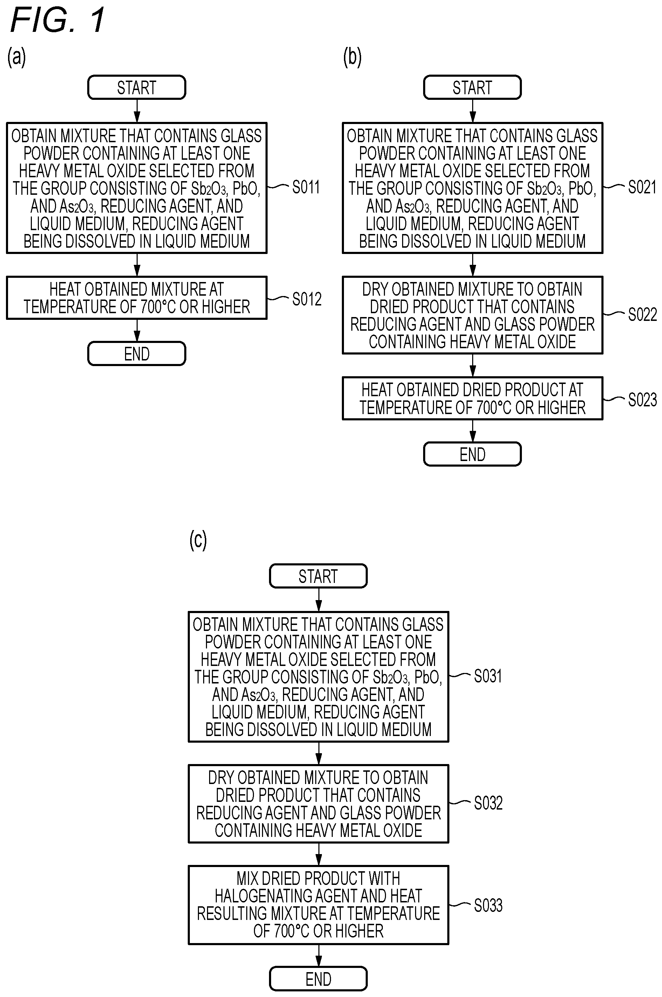

[FIG. 1] (a) of FIG. 1 is a diagram illustrating an example of a flowchart of a first production method according to the present invention. (b) of FIG. 1 is a diagram illustrating an example of a flowchart of a second production method according to the present invention. (c) of FIG. 1 is a diagram illustrating an example of a flowchart of a third production method according to the present invention.

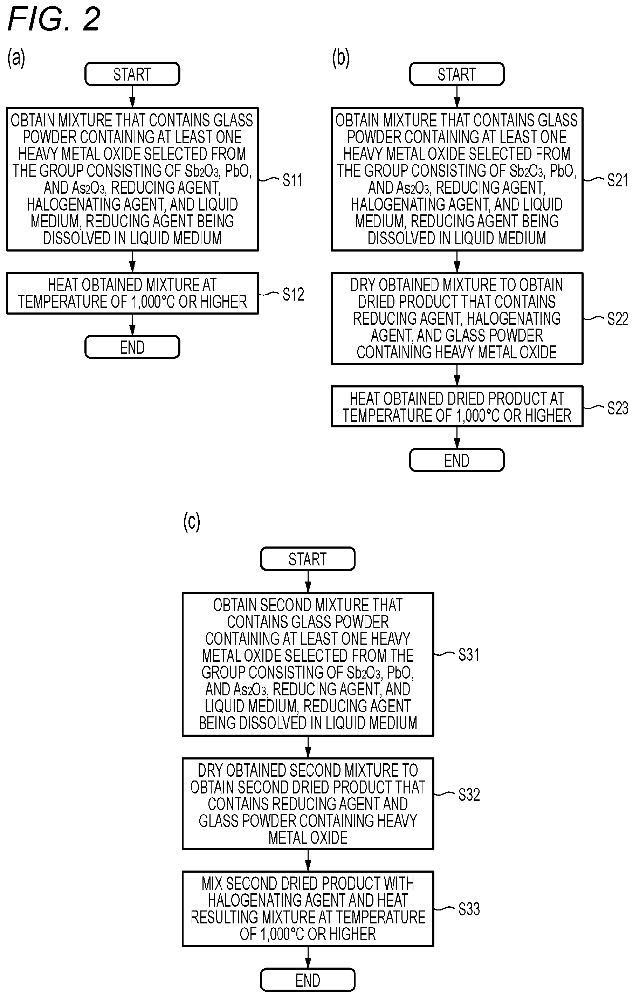

[FIG. 2] (a) of FIG. 2 is a diagram illustrating an example of a preferred flowchart of the first production method according to the present invention. (b) of FIG. 2 is a diagram illustrating an example of a preferred flowchart of the second production method according to the present invention. (c) of FIG. 2 is a diagram illustrating an example of a preferred flowchart of the third production method according to the present invention.

### DESCRIPTION OF EMBODIMENTS

Hereinafter, the present invention is described in detail, but the present invention is not limited to the following embodiment, and can be freely modified and implemented without departing from the gist of the present invention. In addition, the symbol "-" or the word "to" that is used to express a numerical range includes the numerical values before and after the symbol or the word as the upper limit value and the lower limit value of the range, respectively.

In the present description, "glass", "glass powder", "glass material", and "glass raw material" are used with different meanings.

### <<Method for Producing Glass>>

A method for producing a glass according to one embodiment of the present invention (hereinafter, also referred to as first production method) includes: obtaining a mixture; and heating the mixture at a temperature of 700°C or higher, in which the mixture contains a glass powder containing at least one heavy metal oxide (hereinafter, also referred to as heavy metal oxide of the present embodiment) selected from the group consisting of Sb₂O₃, PbO, and As₂O₃, a reducing agent, and a liquid medium, and the reducing agent is dissolved in the liquid medium. It is preferable that the mixture further contains a halogenating agent, it is also preferable that the mixture is heated at a temperature of 1,000°C or higher, and it is more preferable that the mixture further contains a halogenating agent and the mixture is heated at a temperature of 1,000°C or higher.

In addition, a method for producing a glass according to another embodiment of the present invention (hereinafter, also referred to as second production method) includes: obtaining a mixture; drying the mixture to obtain a dried product; and heating the dried product at a temperature of 700°C or higher, in which the mixture contains a glass powder containing at least one heavy metal oxide selected from the group consisting of Sb₂O₃, PbO, and As₂O₃, a reducing agent, and a liquid medium, the reducing agent is dissolved in the liquid medium, and the dried product contains the reducing agent and the glass powder containing the heavy metal oxide. It is preferable that the mixture further contains a halogenating agent and the obtained dried product also contains the halogenating agent, it is also preferable that the dried product is heated at a temperature of 1,000°C or higher, and it is more preferable that the mixture further contains a halogenating agent and the dried product is heated at a temperature of 1,000°C or higher.

In addition, a method for producing a glass according to another embodiment of the present invention (hereinafter, also referred to as third production method) includes: obtaining a mixture; drying the mixture to obtain a dried product; mixing the dried product with a halogenating agent; and heating the resulting mixture at a temperature of 700°C or higher, in which the mixture contains a glass powder containing at least one heavy metal oxide selected from the group consisting of Sb₂O₃, PbO, and As₂O₃, a reducing agent, and a liquid medium, the reducing agent is dissolved in the liquid medium, and the dried product contains the reducing agent and the glass powder containing the heavy metal oxide. It is preferable that the resulting mixture of the dried product and the halogenating agent is heated at a temperature of 1,000°C or higher.

According to the first production method, the second production method, and the third production method of the present embodiment (hereinafter, also collectively referred to as production method of the present embodiment), a glass in which an amount of the heavy metal oxide is reduced is obtained.

This is presumed to be due to the following mechanism.

That is, since the reducing agent is in a state of being dissolved in the liquid medium in the mixture, the reducing agent can be substantially uniformly present over the entire surface of the glass powder, and in the subsequent heating step, the heavy metal oxide of the present embodiment contained in the glass powder can be efficiently reacted with the reducing agent to generate fine particles of a heavy metal. Then, the heavy metal is vaporized by heating, or the heavy metal is oxidized into a heavy metal oxide and then vaporized. Further, in a case where the halogenating agent is present, the heavy metal oxide and the halogenating agent react with each other in the presence of the reducing agent, whereby the heavy metal is efficiently halogenated, and the halogenated heavy metal is vaporized together at the heating. It is considered that an amount of the heavy metal oxide in the glass to be obtained is reduced by these reactions.

(a) of FIG. 1 illustrates an example of a flowchart of the first production method. In addition, (a) of FIG. 2 illustrates a preferred example of the flowchart of the first production method.

In the first production method, first, a mixture is obtained that contains a glass powder containing at least one heavy metal oxide selected from the group consisting of Sb₂O₃, PbO, and As₂O₃, a reducing agent, and a liquid medium, in which the reducing agent is dissolved in the liquid medium (step S011). Subsequently, the obtained mixture is heated at a temperature of 700°C or higher (step S012). As described above, in the first production method, a glass is obtained through the above two steps.

In addition, in step S011, the mixture preferably further contains a halogenating agent in addition to the glass powder, the reducing agent, and the liquid medium (step S11). Further, in step S012, the obtained mixture is preferably heated at a temperature of 1,000°C or higher (step S12).

(b) of FIG. 1 illustrates an example of a flowchart of the second production method. In addition, (b) of FIG. 2 illustrates a preferred example of the flowchart of the second production method.

The second production method includes a step of drying the mixture before the heating step, in addition to the respective steps in the first production method. That is, in the second production method, similar to that in the first production method, first, a mixture is obtained that contains a glass powder containing at least one heavy metal oxide selected from the group consisting of Sb₂O₃, PbO, and As₂O₃, a reducing agent, and a liquid medium, in which the reducing agent is dissolved in the liquid medium (step S021). Subsequently, in the second production method, a step of drying the mixture to obtain a dried product that contains the reducing agent and the glass powder containing the heavy metal oxide is performed (step S022) before the obtained mixture is heated. Then, the obtained dried product is heated at a temperature of 700°C or higher (step S023). As described above, in the second production method, a glass is obtained through the above three steps.

In addition, in step S021, the mixture preferably further contains a halogenating agent in addition to the glass powder, the reducing agent, and the liquid medium (step S21). That is, in step S022, the dried product preferably further contains a halogenating agent in addition to the glass powder and the reducing agent (step S22). Further, in step S023, the obtained dried product is preferably heated at a temperature of 1,000°C or higher (step S23).

(c) of FIG. 1 illustrates an example of a flowchart of the third production method. In addition, (c) of FIG. 2 illustrates a preferred example of the flowchart of the third production method.

The third production method is the same as the second production method in including a step of drying the mixture before the heating step, and is different from the second production method in adding a halogenating agent after the mixture is dried.

That is, in the third production method, first, a mixture is obtained that contains a glass powder containing at least one heavy metal oxide selected from the group consisting of Sb₂O₃, PbO, and As₂O₃, a reducing agent, and a liquid medium, in which the reducing agent is dissolved in the liquid medium (steps S031 and S31). Subsequently, the obtained mixture is dried to obtain a dried product that contains the reducing agent and the glass powder containing the heavy metal oxide (steps S032 and S32). Then, the dried product and the halogenating agent are mixed and heated at a temperature of 700°C or higher (step S033). As described above, in the third production method, a glass is obtained through the above three steps.

In addition, in step S033, the dried product and the halogenating agent are preferably mixed and heated at a temperature of 1,000°C or higher (step S33).

Hereinafter, the production method of the present embodiment will be described in detail for each of the steps.

### <Preparation of Mixture>

In any of the first, second, and third production methods, first, a mixture (hereinafter, also referred to as mixture of the present embodiment) is obtained that contains a glass powder containing at least one heavy metal oxide selected from the group consisting of Sb₂O₃, PbO, and As₂O₃, a reducing agent, and a liquid medium, in which the reducing agent is dissolved in the liquid medium (steps S011, S021, and S031). In the first and second production methods, the mixture preferably further contains a halogenating agent (steps S11 and S21).

### (Glass Powder)

As the glass powder, a glass powder containing at least one heavy metal oxide selected from the group consisting of Sb₂O₃, PbO, and As₂O₃ may be used as it is, or a glass powder obtained by pulverizing a glass material containing at least one heavy metal oxide selected from the group consisting of Sb₂O₃, PbO, and As₂O₃ using a ball mill, a vibration mill, or the like may be used. In the latter case, the glass powder may be obtained by pulverizing the glass material after the glass material is mixed with a reducing agent solution and optional halogenating agent, or after the reducing agent is mixed with optional halogenating agent and a liquid medium, as to be described later.

The glass powder mainly targeted by the present embodiment is a glass powder obtained by crushing PV cullet containing Sb₂O₃, which is obtained by crushing a solar panel described in detail in the section of BACKGROUND ART, and a main object of the present embodiment is to produce a new glass using a crushed product of the PV cullet. However, in the production method of the present embodiment, the glass powder to be used is not limited to the crushed product of the PV cullet, and a glass powder of another source and type may also be used. Further, the heavy metal oxide of the present embodiment is not limited to Sb₂O₃, and PbO and As₂O₃ may be included from the viewpoint of removing harmful substances. Since the mechanism described above is applied to not only Sb₂O₃ but also PbO and As₂O₃ as the heavy metal oxide, an amount of the heavy metal oxide in the glass to be obtained by the production method of the present embodiment can be reduced.

That is, the glass powder contains at least one heavy metal oxide selected from the group consisting of Sb₂O₃, PbO, and As₂O₃. The glass powder preferably contains Sb₂O₃ as the heavy metal oxide from the viewpoint of low harmfulness.

In the first and second production methods, a content of the glass powder with respect to the entire mixture of the present embodiment is generally 40 mass% to 99.9 mass%, preferably 55 mass% to 95 mass%, and more preferably 70 mass% to 90 mass%, from the viewpoint of efficiently promoting the reaction between the glass powder and the reducing agent or optional halogenating agent and from the viewpoint of appropriately controlling a composition of the glass. Here, the content thereof may be 40 mass% or more, preferably 55 mass% or more, and more preferably 70 mass% or more, and may be 99.9 mass% or less, preferably 95 mass% or less, and more preferably 90 mass% or less.

In the third production method, the content of the glass powder with respect to the entire mixture is generally 40 mass% to 99.9 mass%, preferably 60 mass% to 98 mass%, and more preferably 75 mass% to 95 mass%. Here, the content thereof may be 40 mass% or more, preferably 60 mass% or more, and more preferably 75 mass% or more, and may be 99.9 mass% or less, preferably 98 mass% or less, and more preferably 95 mass% or less.

In the mixture of the present embodiment in the first and second production methods, a content of the entire heavy metal oxide of the present embodiment with respect to the entire glass powder, that is, a total amount of Sb₂O₃, PbO, and As₂O₃, is generally 0.005 mass% to 1 mass%, preferably 0.01 mass% to 0.5 mass%, and more preferably 0.05 mass% to 0.3 mass%. Here, the total amount thereof may be 0.005 mass% or more, preferably 0.01 mass% or more, and more preferably 0.05 mass% or more, and may be 1 mass% or less, preferably 0.5 mass% or less, and more preferably 0.3 mass% or less.

In the mixture in the third production method, the content of the entire heavy metal oxide of the present embodiment with respect to the entire glass powder is also the same as described above.

A median diameter d50 of the glass powder is preferably 100 µm or less, more preferably 50 µm or less, and further preferably 10 µm or less from the viewpoint of increasing a surface area of particles in the glass powder and promoting the reaction between the glass powder and the reducing agent or optional halogenating agent. A lower limit of the median diameter d50 is not particularly limited, and is, for example, 0.1 µm or more.

The median diameter d50 means a particle diameter at an integrated value of 50% in a particle diameter distribution obtained by a laser diffraction/scattering method, and is measured using a laser diffraction/scattering particle diameter distribution analyzer (for example, SALD-2300 manufactured by Shimadzu Corporation). The measurement is performed by a wet method in which the glass powder is dispersed in water, and an aggregated powder is crushed by ultrasonic waves in advance.

A glass composition in the glass powder will be described below. Note that, a composition range of each component is hereinafter expressed in terms of mass% based on an oxide unless otherwise specified.

The glass powder preferably contains, in terms of mass% based on an oxide, 60% to 80% of SiO₂, 5% to 20% of Na₂O, 0% to 15% of MgO, 5% to 20% of CaO, 0% to 10% of Al₂O₃, and 0.005% to 1% of the heavy metal oxide (the content of the heavy metal oxide means total amount of Sb₂O₃, PbO, and As₂O₃). When the glass powder contains these components within the above ranges, a composition, other than the heavy metal oxide, of the glass to be obtained by the production method of the present embodiment can be easily brought close to the above ranges, and the content of the heavy metal oxide can be appropriately reduced.

In the glass powder, a content of SiO₂ is preferably 60% to 80%. SiO₂ contributes to improving a Young's modulus, thereby making it easier to ensure the strength required for automobile applications, and the like in the glass to be obtained. When the content of SiO₂ is 60% or more, the weather resistance of the glass to be obtained is easily ensured, an average linear expansion coefficient is not excessively increased, and the glass is less likely to be thermally cracked. On the other hand, when the content of SiO₂ is 80% or less, the viscosity at the time of melting the glass is not excessively increased, and the glass production is less likely to be difficult.

The content of SiO₂ in the glass powder is more preferably 65% or more, further preferably 68% or more, and particularly preferably 70% or more. In addition, the content of SiO₂ in the glass powder is more preferably 78% or less, further preferably 76% or less, and particularly preferably 74% or less.

In the glass powder, a content of Na₂O is preferably 5% to 20%. Na₂O is a component that improves the solubility of the glass. When 5% or more of Na₂O is contained, the viscosity of the glass is reduced, and thus the moldability of a glass for a vehicle, particularly a windshield, is improved. The content of Na₂O in the glass powder is more preferably 8% or more, further preferably 10% or more, and particularly preferably 12% or more.

On the other hand, when Na₂O is 20% or less, the average linear expansion coefficient is not excessively increased, and the glass is less likely to be thermally cracked. The content of Na₂O in the glass powder is more preferably 18% or less, further preferably 16% or less, and particularly preferably 14% or less.

In the glass powder, a content of MgO is preferably 0% to 15%. MgO is a component that promotes dissolution of a glass raw material and that improves the weather resistance and the Young's modulus. In a case where the glass powder contains MgO, the content of MgO is more preferably 1% or more, and further preferably 2% or more. In addition, when the content of MgO in the glass powder is 15% or less, devitrification is less likely to occur. The content of MgO in the glass powder is more preferably 10% or less, further preferably 7% or less, and particularly preferably 5% or less.

In the glass powder, a content of CaO is preferably 5% to 20%. CaO is a component that improves the solubility of the glass raw material. The content of CaO is more preferably 6% or more, and further preferably 7% or more.

In addition, when the content of CaO in the glass powder is 20% or less, an increase in specific gravity of the glass is prevented, and low brittleness and the strength are maintained. In order to prevent the glass from becoming brittle, the content of CaO in the glass powder is more preferably 15% or less, further preferably 12% or less, and particularly preferably 10% or less.

In the glass powder, a content of Al₂O₃ is preferably 0% to 10%. Al₂O₃ is a component that forms a network structure of a glass. In a case where the glass powder contains Al₂O₃, the content of Al₂O₃ is preferably 0.5% or more, and more preferably 1% or more. When the content of Al₂O₃ is within the above range, the Young's modulus can be increased. In addition, the weather resistance, the moisture resistance, and the chemical durability are improved. In addition, average linear expansion coefficient is not excessively increased, thermal cracking of the glass can be prevented, and a chemical strengthening treatment using ion exchange is possible.

In addition, when the content of Al₂O₃ in the glass powder is 10% or less, an increase in viscosity at the time of melting the glass raw material is prevented, the glass production is facilitated, and the moldability of the glass for a vehicle, particularly the windshield, a cover glass for a sensor, and the like, is improved. The content of Al₂O₃ is more preferably 5% or less, further preferably 3% or less, particularly preferably 2% or less, and most preferably 1.5% or less.

As described above, in the glass powder, the content of the heavy metal oxide, that is, the total content of Sb₂O₃, PbO, and As₂O₃, is preferably 0.005% to 1%. As described above, when Sb₂O₃ is contained in the glass powder, reducing is performed during a float process, and coloring or white haze may occur in the glass to be obtained. The degree of coloring or white haze correlates with the content of Sb₂O₃. In addition, when PbO and As₂O₃ are contained in the glass powder, there may be a problem from the viewpoint of elution to the environment and the viewpoint of harmfulness to a human body.

The content of the heavy metal oxide in the glass powder may be 0.01% or more, or may be 0.05% or more. In addition, the content of the heavy metal oxide in the glass powder may be 0.7% or less, may be 0.5% or less, or may be 0.3% or less.

The glass powder may contain components (hereinafter, also referred to as "other components") other than the above SiO₂, Na₂O, MgO, CaO, Al₂O₃, and the heavy metal oxide, and in a case where the other components are contained, a total content thereof is preferably 5% or less.

For example, the glass powder may contain K₂O as the other component. K₂O is a component that improves the solubility of the glass raw material. In a case where the glass powder contains K₂O, a content of K₂O is preferably 0.01% or more, more preferably 0.05% or more, and further preferably 0.1% or more.

On the other hand, when the content of K₂O is too large, the average linear expansion coefficient is excessively increased, and the glass is likely to be thermally cracked. Therefore, the content of K₂O in the glass powder is preferably 5% or less, more preferably 1% or less, further preferably 0.5% or less, and particularly preferably 0.2% or less.

Further, for example, the glass powder may contain SO₃ as the other component. SO₃ is a component that functions as a refining agent, and most of SO₃ is generally decomposed into SO₂ and O₂ in a step of producing a glass and released as bubbles to the outside of the system. In a case where the glass powder contains SO₃, a content of SO₃ is preferably 0.01% or more, more preferably 0.05% or more, further preferably 0.1% or more, and particularly preferably 0.2% or more.

In addition, the content of SO₃ in the glass powder is preferably 1% or less, more preferably 0.5% or less, and further preferably 0.4% or less from the viewpoint of preventing reduction in quality due to an increase in white bubbles, that is, sulfate defects.

Further, for example, the glass powder may contain Fe₂O₃ as the other component. Fe₂O₃ may be contained to impart thermal barrier properties to the glass. A content of Fe₂O₃ here refers to a total content of iron (content in terms of Fe₂O₃) including FeO which is an oxide of divalent iron and Fe₂O₃ which is an oxide of trivalent iron.

In a case where the glass powder contains Fe₂O₃, the content of Fe₂O₃ is preferably 0.005% or more, and more preferably 0.008% or more.

In addition, the content of Fe₂O₃ in the glass powder is more preferably 2% or less, further preferably 0.05% or less, and particularly preferably 0.02% or less from the viewpoint of increasing a transmittance of the glass.

Other examples of the other components include Li₂O, B₂O₃, ZnO, SrO, BaO, ZrO₂, Y₂O₃, TiO₂, CeO₂, Nd₂O₅, GaO₂, GeO₂, MnO₂, NiO, Cr₂O₃, V₂O₅, Er₂O₃, Au₂O₃, Ag₂O, CuO, CdO, MoO₃, Cl, F, and SnO₂, and the other components may be metal ions or oxides. The other components may be contained for various purposes (for example, refining and coloring).

### (Reducing Agent)

A type of the reducing agent of the present embodiment is not particularly limited as long as the reducing agent can reduce at least one heavy metal oxide selected from the group consisting of Sb₂O₃, PbO, and As₂O₃, and dissolves in a liquid medium to be described later. From the viewpoint of being dissolved in water that is preferable as the liquid medium, the reducing agent of the present embodiment is preferably a water-soluble organic compound. In particular, an organic compound having a boiling point of 250°C or higher is preferable because it appropriately functions as the reducing agent even during heating at a temperature of 700°C or higher or 1,000°C or higher.

Examples of the water-soluble organic compound include saccharides, glycols, hydroxy acid, amino acid, carboxylic acid, ester, protein, gelatin, and polymers (polyvinyl alcohol, polyamide, polyethylene oxide, polyacrylic acid, polyacrylamide, polyethylenimine, and the like), and among these, saccharides are preferable from the viewpoint of high solubility in water.

The saccharides are classified into monosaccharides, disaccharides, and polysaccharides. Examples of the monosaccharides include glucose and fructose. Examples of the disaccharides include sucrose, lactose, maltose, trehalose, and sucralose, and among these, sucrose is preferable because it is easily available. Examples of the polysaccharides include starch, glycogen, agarose (agar), pectin, and gums. Since sucralose contains Cl, it can assist in the role of a halogenating agent to be described later.

An organic solvent may be used as the liquid medium. Examples of the organic solvent include an ether-based solvent, an alcohol-based solvent, an ester-based solvent, a ketone-based solvent, and other hydrocarbon-based solvent.

As the reducing agent dissolved in the organic solvent as the liquid medium, a resin is preferable. Examples of the resin include cellulose, acryl, polymethyl methacrylate (PMMA), polyvinyl alcohol (PVA), ethylene-vinyl acetate (EVA), polyvinyl butyral (PVB), polyethylene (PE), polyvinyl chloride (PVC), polypropylene (PP), polystyrene (PS), polyamide (PA), polycarbonate (PC), butyral, melamine, rosin, silicone, polyester, and epoxy.

In the present embodiment, the reducing agent may be used as a reducing agent solution in a state of being dissolved in a liquid medium from the beginning to obtain the mixture of the present embodiment, or as a powdery reducing agent mixed with the liquid medium together with other components such as a halogenating agent to obtain the mixture of the present embodiment. In addition, a reducing agent may be dissolved in a liquid medium used as an additive when the glass is pulverized. The reducing agent solution means a liquid in which the above-described reducing agent is dissolved in the liquid medium.

In the mixture of the present embodiment in the first and second production methods, a content of the reducing agent dissolved in the liquid medium with respect to 100 parts by mass of the glass powder is generally 1 part by mass to 30 parts by mass, preferably 3 parts by mass to 20 parts by mass, and more preferably 5 parts by mass to 15 parts by mass, from the viewpoint of sufficiently reducing the heavy metal oxide of the present embodiment and from the viewpoint of not leaving a large content of residue of the reducing agent after heating. Here, the content thereof may be 1 part by mass or more, preferably 3 parts by mass or more, and more preferably 5 parts by mass or more, and may be 30 parts by mass or less, preferably 20 parts by mass or less, and more preferably 15 parts by mass or less. In a case where the reducing agent solution is used, a product of the content of the reducing agent solution with respect to 100 parts by mass of the glass powder and a weight concentration of the reducing agent in the reducing agent solution is set to fall within the above range. In the mixture in the third production method, the content of the reducing agent dissolved in the liquid medium with respect to 100 parts by mass of the glass powder is the same as described above.

### (Halogenating Agent)

In the first and second production methods, the mixture of the present embodiment preferably contains a halogenating agent. In the third production method, after a step of obtaining a dried product to be described later and before the heating step, the dried product and a halide are mixed.

The halogenating agent is not limited as long as the halogenating agent can convert at least one heavy metal oxide selected from the group consisting of Sb₂O₃, PbO, and As₂O₃ in the glass powder into a halide, and is preferably a halogen-containing organic high-molecular-weight compound or a halogen-containing inorganic compound from the viewpoint of availability and the like.

The halogen-containing organic high-molecular-weight compound is an organic high-molecular-weight compound containing a halogen atom, and examples thereof include polyvinylidene chloride and polyvinyl chloride. Since the halogen-containing organic high-molecular-weight compound contains C, it can assist in the role of the reducing agent.

Examples of the halogen-containing inorganic compound include CaCl₂, CaCl₂·2H₂O, CaCl₂·4H₂O, CaCl₂·6H₂O, CaBr₂, CaBr₂·2H₂O, CaBr₂·4H₂O, CaBr₂·6H₂O, CaF₂, KCl, NaCl, NaF, MgCl₂, MgCl₂·6H₂O, and NH₄Cl. Among these, CaCl₂, CaCl₂·2H₂O, and NaCl are particularly preferable from the viewpoint of cost, halogen content, and the like.

As the halogenating agent, a powdery halogenating agent may be used, or a halogenating agent solution in which the halogenating agent is dissolved in a liquid medium may be used. Examples of the halogenating agent solution include a halogenating agent aqueous solution using water as the liquid medium.

In addition, in the first and second production methods, the liquid medium that dissolves the halogenating agent may function as a liquid medium that dissolves the above-described reducing agent in the mixture of the present embodiment.

In the first and second production methods, in a case where the mixture of the present embodiment contains the halogenating agent, a content of the halogenating agent with respect to 100 parts by mass of the glass powder is generally 1 part by mass to 30 parts by mass, preferably 2 parts by mass to 20 parts by mass, and more preferably 3 parts by mass to 15 parts by mass, from the viewpoint of sufficiently halogenating the heavy metal oxide of the present embodiment and from the viewpoint of setting an amount of a halogen-containing gas to be volatilized in an appropriate range. Here, the content thereof may be 1 part by mass or more, preferably 2 parts by mass or more, and more preferably 3 parts by mass or more, and may be 30 parts by mass or less, preferably 20 parts by mass or less, and more preferably 15 parts by mass or less. In a case where the halogenating agent solution is used, a product of the content of the halogenating agent solution with respect to 100 parts by mass of the glass powder and a weight concentration of the halogenating agent in the halogenating agent solution is set to fall within the above range.

Further, an added amount of the halogenating agent to be mixed with the dried product to be described later with respect to 100 parts by mass of the glass powder in the third production method is also the same as the range of the content of the halogenating agent with respect to 100 parts by mass of the glass powder in the mixture of the present embodiment in the first and second production methods described above.

### (Liquid Medium)

The liquid medium is not particularly limited as long as the liquid medium dissolves the above-described reducing agent in the mixture of the present embodiment. Examples thereof include water and organic solvents (ethanol, isopropyl alcohol, and the like), and among these, water is preferable from the viewpoint of safety.

In the mixture of the present embodiment in the first and second production methods, a content of the liquid medium with respect to 100 parts by mass of the glass powder is generally 1 part by mass to 50 parts by mass, preferably 3 parts by mass to 30 parts by mass, and more preferably 5 parts by mass to 20 parts by mass from the viewpoint of sufficiently reducing the heavy metal oxide of the present embodiment and from the viewpoint of setting generation of vapor to a certain range. Here, the content thereof may be 1 part by mass or more, preferably 3 parts by mass or more, and more preferably 5 parts by mass or more, and may be 50 parts by mass or less, preferably 30 parts by mass or less, and more preferably 20 parts by mass or less. In the mixture in the third production method, the content of the liquid medium with respect to 100 parts by mass of the glass powder is the same as described above.

In the mixture of the present embodiment, the above-described reducing agent is in a state of being dissolved in the liquid medium.

The liquid medium may be any medium as long as the liquid medium dissolves the reducing agent and is contained in the mixture of the present embodiment, and for example, may be a liquid medium derived from the reducing agent solution described above, may be a liquid medium derived from the halogenating agent solution in which the halogenating agent is dissolved, may be a liquid medium derived from a solution in which other components contained in the mixture of the present embodiment are dissolved, may be a liquid medium used as an additive when the glass is pulverized, or may be another liquid medium. In a case where the liquid medium is derived from a solution in which components other than the reducing agent among the components contained in the mixture of the present embodiment are dissolved, the reducing agent may not dissolve in the mixture of the present embodiment depending on the amount of the liquid medium and/or the mixing method. Therefore, the liquid medium is preferably a liquid medium derived from the reducing agent solution.

In the production method of the present embodiment, it is important that the reducing agent is in a state of being dissolved in the liquid medium in the mixture of the present embodiment. As described above, since the reducing agent is dissolved in the liquid medium in the mixture of the present embodiment, the reducing agent can be substantially uniformly present over the entire surface of the glass powder, and in the heating step to be described later, the heavy metal oxide contained in the glass powder and the reducing agent can be efficiently reacted with each other, and fine particles of the heavy metal can be generated. Then, the heavy metal is vaporized by heating, or vaporized after the heavy metal becomes a heavy metal oxide. In addition, in a case where the halogenating agent is present, the heavy metal oxide and the halogenating agent react with each other in the presence of the reducing agent, whereby the halogenated heavy metal is vaporized at the heating. It is considered that these reactions lead to a reduction in the amount of the heavy metal oxide derived from the glass powder in the glass to be obtained. The reducing agent can be dispersed on a surface of the glass powder to some extent by pulverizing the glass together with the reducing agent without using a liquid medium, but this is insufficient from the viewpoint of uniformity.

The method for obtaining the mixture of the present embodiment in the first and second production methods is not particularly limited, and examples thereof include the following methods (1) and (2).
(1) A glass powder containing at least one heavy metal oxide selected from the group consisting of Sb₂O₃, PbO, and As₂O₃, a reducing agent solution, and optionally a halogenating agent are mixed to obtain the mixture of the present embodiment.
(2) A glass material containing at least one heavy metal oxide selected from the group consisting of Sb₂O₃, PbO, and As₂O₃, a reducing agent solution, and optionally a halogenating agent are mixed, and then the glass material is pulverized into a glass powder to obtain the mixture of the present embodiment.

The method for obtaining the mixture in the third production method is not particularly limited, and examples thereof include the following methods (3) and (4).
(3) A glass powder containing at least one heavy metal oxide selected from the group consisting of Sb₂O₃, PbO, and As₂O₃, and a reducing agent solution are mixed to obtain a mixture.
(4) A glass material containing at least one heavy metal oxide selected from the group consisting of Sb₂O₃, PbO, and As₂O₃, and a reducing agent solution are mixed, and then the glass material is pulverized into a glass powder to obtain a mixture.

In the method (1), the reducing agent solution, optionally the halogenating agent, and the glass powder containing the heavy metal oxide are mixed. In the method (3), the reducing agent solution and the glass powder containing the heavy metal oxide are mixed. These mixing methods are not particularly limited, and examples thereof include stirring by vibration, a screw, or the like, and spraying a reducing agent solution onto a glass powder by shower or the like.

In the method (2), unlike the method (1), the reducing agent solution, optionally the halogenating agent, and the glass material before pulverization containing the heavy metal oxide are mixed, and then the glass material is pulverized to obtain a mixture containing a glass powder. Also in the method (4), the reducing agent solution and the glass material before pulverization containing the heavy metal oxide are mixed, and then the glass material is pulverized to obtain a mixture containing a glass powder.

Examples of the glass material include a glass cullet, a glass plate, and a glass bottle. The mixing method and the pulverization method are not particularly limited, and examples thereof include methods using a ball mill, a disk mill, a vibration mill, and a jet mill.

In addition to the methods (1) to (4), instead of using the reducing agent solution as described above, the mixture of the present embodiment may be obtained by mixing a powdery reducing agent with a liquid medium together with other components.

In addition, it is preferable that 90% or more of a weight of the glass powder and the glass material is made of glass, and a resin, a metal, a film, or the like may be contained therein (or adhered thereto). In particular, when a waste such as PV cullet is utilized, there is a possibility that these are mixed. The resin or metal assists in the role of the reducing agent during heating. Examples of the resin include ethylene-vinyl acetate copolymer (EVA) and polyvinyl butyral (PVB), and examples of the metal include Al, Si, Cu, and Fe.

In addition, the mixture of the present embodiment may contain, in addition to the reducing agent dissolved in the above-described liquid medium, at least one of a metal powder, a water-insoluble organic powder, and a carbon powder that are not dissolved in the liquid medium (collectively referred to as insoluble powder) as a reduction promoter. When the mixture of the present embodiment contains the insoluble powder, the reduction of the heavy metal oxide is further promoted, and thus the vaporization of the heavy metal is promoted thereafter.

The metal powder is preferably a metal powder containing at least one element selected from the group consisting of Al, Si, Cu, and Fe. The water-insoluble organic powder is preferably a polymer organic substance, and particularly preferably a resin such as EVA, PVB, or silicone.

In a case where the mixture of the present embodiment contains the insoluble powder, a content of the insoluble powder with respect to 100 parts by mass of the glass powder in the mixture of the present embodiment is generally 0.1 parts by mass to 20 parts by mass, preferably 1 part by mass to 15 parts by mass, and more preferably 2 parts by mass to 10 parts by mass, from the viewpoint of appropriately controlling the composition of the glass to be obtained by the production method of the present embodiment and from the viewpoint of sufficiently reducing the heavy metal oxide of the present embodiment. Here, the content thereof may be 0.1 parts by mass or more, preferably 1 part by mass or more, and more preferably 2 parts by mass or more, and may be 20 parts by mass or less, preferably 15 parts by mass or less, and more preferably 10 parts by mass or less.

The insoluble powder may be contained in the mixture of the present embodiment before the heating step to be described later. An aspect in which the insoluble powder is contained in the mixture may be, for example, an aspect in which the insoluble powder is mixed with other components in steps of (1) to (4) to obtain the mixture of the present embodiment, an aspect in which the insoluble powder is added to the mixture obtained in steps of (1) to (4), or other aspects.

The mixture of the present embodiment may contain, in addition to the glass powder, a glass raw material for the purpose of adjusting a composition of the glass to be obtained. In the production method of the present embodiment, the halogenating agent is optionally added, and in a case where the halogenating agent is added, the composition of the glass to be obtained may be imbalanced depending on the type of the halogenating agent, and the imbalance of the glass composition can be adjusted by containing the glass raw material. The "glass raw material" here is distinguished from the "glass" obtained by the production method of the present embodiment, the "glass powder", and the "glass material".

As the glass raw material, known glass raw materials in the related art such as oxides, carbonates, nitrates, and sulfates can be appropriately used depending on a composition of a desired glass. In addition, a refining agent such as sulfate is also contained in the glass raw material.

In a case where the mixture of the present embodiment contains the glass raw material, a content of the glass raw material with respect to 100 parts by mass of the glass powder in the mixture of the present embodiment is generally 0.1 parts by mass to 50 parts by mass, preferably 0.5 parts by mass to 20 parts by mass, and more preferably 1 part by mass to 10 parts by mass, from the viewpoint of appropriately adjusting the composition of the glass to be obtained by the production method of the present embodiment. Here, the content thereof may be 0.1 parts by mass or more, preferably 0.5 parts by mass or more, and more preferably 1 part by mass or more, and may be 50 parts by mass or less, preferably 20 parts by mass or less, and more preferably 10 parts by mass or less.

### <Drying Step>

In the second production method, before heating the mixture of the present embodiment, a step of drying the mixture to obtain a dried product (hereinafter, also referred to as dried product of the present embodiment) that contains the reducing agent and the glass powder containing the heavy metal oxide is performed (step S022). In the above step, when a halogenating agent is contained in the mixture, the halogenating agent or a halogen component derived therefrom is also contained in the dried product (step S22).

In the third production method, before heating the mixture that contains the glass powder containing at least one heavy metal oxide selected from the group consisting of Sb₂O₃, PbO, and As₂O₃, the reducing agent, and the liquid medium, in which the reducing agent is dissolved in the liquid medium, a step of drying the mixture to obtain a dried product that contains the reducing agent and the glass powder containing the heavy metal oxide is performed (steps S032 and S32).

The drying of the mixture of the present embodiment is not particularly limited, and examples thereof include a method for drying in an oven at 30°C to 250°C for 1 minute to 600 minutes, and a method for drying by exposure to sunlight for several hours to several months. In addition, the drying may be performed by heat generated by mixing or pulverization in the process of obtaining the mixture of the present embodiment without particularly providing a drying step.

In a case where the dried product of the present embodiment is an aggregate, the dried product may be crushed by various mills, crushers, or the like.

In the second production method, the dried product of the present embodiment that contains the reducing agent, optionally the halogenating agent, and the glass powder containing the heavy metal oxide is obtained by the drying step described above.

In the third production method, a dried product that contains the reducing agent and the glass powder containing the heavy metal oxide is obtained by the drying step described above.

In the second production method, a content of the glass powder with respect to the entire dried product of the present embodiment is generally 60 mass% to 99 mass%, preferably 75 mass% to 98 mass%, and more preferably 85 mass% to 97 mass%, from the viewpoint of efficiently promoting the reaction between the glass powder and the reducing agent or optional halogenating agent and from the viewpoint of appropriately controlling a composition of the glass. Here, the content thereof may be 60 mass% or more, preferably 75 mass% or more, and more preferably 85 mass% or more, and may be 99 mass% or less, preferably 98 mass% or less, and more preferably 97 mass% or less.

In the third production method, the content of the glass powder with respect to the entire dried product is also the same as described above.

In the dried product of the present embodiment in the second production method, a content of the reducing agent with respect to 100 parts by mass of the glass powder is generally 1 part by mass to 30 parts by mass, preferably 2 parts by mass to 20 parts by mass, and more preferably 3 parts by mass to 15 parts by mass, from the viewpoint of sufficiently reducing the heavy metal oxide and from the viewpoint of not leaving a large content of residue of the reducing agent after heating. Here, the content thereof may be 1 part by mass or more, preferably 2 parts by mass or more, and more preferably 3 parts by mass or more, and may be 30 parts by mass or less, preferably 20 parts by mass or less, and more preferably 15 parts by mass or less.

In the dried product in the third production method, the content of the reducing agent with respect to 100 parts by mass of the glass powder is the same as described above.

In a case where the dried product of the present embodiment in the second production method contains a halogenating agent, a content of the halogenating agent with respect to 100 parts by mass of the glass powder in the dried product is generally 1 part by mass to 30 parts by mass, preferably 2 parts by mass to 20 parts by mass, and more preferably 3 parts by mass to 15 parts by mass, from the viewpoint of sufficiently halogenating the heavy metal oxide of the present embodiment and from the viewpoint of setting an amount of a halogen-containing gas to be volatilized in an appropriate range. Here, the content thereof may be 1 part by mass or more, preferably 2 parts by mass or more, and more preferably 3 parts by mass or more, and may be 30 parts by mass or less, preferably 20 parts by mass or less, and more preferably 15 parts by mass or less.

Further, an added amount of the halogenating agent to be mixed with the dried product with respect to 100 parts by mass of the glass powder in the third production method is also the same as the range of the content of the halogenating agent with respect to 100 parts by mass of the glass powder in the dried product of the present embodiment in the second production method described above.

Similarly to the mixture of the present embodiment, the dried product of the present embodiment may contain an insoluble powder as a reduction promoter that does not dissolve in the liquid medium described above, or a glass raw material.

In a case where the dried product of the present embodiment in the second production method contains the insoluble powder, a content of the insoluble powder with respect to 100 parts by mass of the glass powder in the dried product of the present embodiment is generally 0.1 parts by mass to 20 parts by mass, preferably 0.5 parts by mass to 20 parts by mass, more preferably 1 part by mass to 15 parts by mass, and further preferably 2 parts by mass to 15 parts by mass, from the viewpoint of appropriately controlling the composition of the glass to be obtained by the production method of the present embodiment and from the viewpoint of sufficiently reducing the heavy metal oxide of the present embodiment. Here, the content thereof may be 0.1 parts by mass or more, preferably 0.5 parts by mass or more, more preferably 1 part by mass or more, and further preferably 2 parts by mass or more, and may be 20 parts by mass or less, and may be 15 parts by mass or less.

The same applies to the dried product in the third production method.

In a case where the dried product of the present embodiment in the second production method contains the glass raw material, a content of the glass raw material with respect to 100 parts by mass of the glass powder in the dried product of the present embodiment is generally 0.1 parts by mass to 50 parts by mass, preferably 0.5 parts by mass to 20 parts by mass, and more preferably 1 part by mass to 10 parts by mass, from the viewpoint of appropriately adjusting the composition of the glass to be obtained by the production method of the present embodiment. Here, the content thereof may be 0.1 parts by mass or more, preferably 0.5 parts by mass or more, and more preferably 1 part by mass or more, and may be 50 parts by mass or less, preferably 20 parts by mass or less, and more preferably 10 parts by mass or less.

The same applies to the dried product in the third production method.

The dried product of the present embodiment is a dried product obtained by drying a mixture, in which the mixture contains a glass powder containing at least one heavy metal oxide selected from the group consisting of Sb₂O₃, PbO, and As₂O₃, a reducing agent, optionally a halogenating agent, and a liquid medium, and the reducing agent is dissolved in the liquid medium, and the dried product contains the glass powder containing the heavy metal oxide, the reducing agent, and optionally the halogenating agent. Since the dried product is obtained by drying the mixture in a state in which the reducing agent is dissolved in the liquid medium as described above, it is considered that the reducing agent is substantially uniformly present over the entire surface of the glass powder. With respect to such a dried product of the present embodiment in a state in which the reducing agent is present in the glass powder, in order to specify a structure thereof, it is necessary to perform analysis such as Raman spectroscopy over the entire surface of the glass powder, and an enormous amount of time is required, and since a presence density of the reducing agent on the surface of the glass powder is extremely low, there is a high possibility that the result is a detection sensitivity or lower. Therefore, since it is impossible to directly specify the dried product of the present embodiment by the structure thereof and there is a situation that is not practical ("impossible/non-practical situation"), the dried product of the present embodiment is appropriately specified as a "product" by the definition of "dried product obtained by drying a mixture".

The dried product of the present embodiment may contain a small amount of water due to insufficient drying. A moisture content in this case is, for example, 3 mass% or less. In addition, the dried product of the present embodiment may contain water of crystallization in the halogenating agent.

### <Heating Step>

A step is obtained in which the mixture obtained in step S011 in the first production method, the dried product obtained in step S022 in the second production method, or a resulting mixture of the dried product obtained in step S032 and a halogenating agent in the third production method is heated at a temperature of 700°C or higher (steps S012, S023, and S033). The temperature for heating in steps S012, S023, and S033 is preferably 1,000°C or higher (steps S12, S23, and S33).

By the heating step, the heavy metal oxide contained in the glass powder reacts with the reducing agent that is substantially uniformly present over the entire surface of the glass powder to obtain fine particles of a heavy metal. Then, the heavy metal is vaporized by heating, or vaporized after the heavy metal becomes a heavy metal oxide. In a case where a halogenating agent is present, a halogenated heavy metal is vaporized at the heating. Accordingly, it is considered that an amount of the heavy metal oxide in the obtained glass is reduced.

A heating temperature is 700°C or higher, preferably 900°C or higher, more preferably 1,000°C or higher, further preferably 1,050°C or higher, still further preferably 1,100°C or higher, and particularly preferably 1,200°C or higher from the viewpoint of efficiently promoting the reaction between the glass powder and the reducing agent or the halogenating agent. In addition, the heating temperature may be 1,400°C or lower from the viewpoint of energy saving and protection of a heating device.

An atmosphere during heating preferably contains water vapor, and it preferably has a dew point temperature of 0°C or higher. In particular, the atmosphere during heating preferably both contains water vapor and has a dew point temperature of 0°C or higher. Accordingly, the vaporization of the heavy metal is promoted. The dew point temperature is more preferably 40°C or higher, further preferably 55°C or higher, and particularly preferably 70°C or higher. Superheated water vapor may be used.

In the atmosphere during heating, a content ratio of oxygen with respect to components other than water vapor is preferably 30 mass% or less. Accordingly, the reaction between the heavy metal oxide contained in the glass powder and the reducing agent is promoted, and the vaporization of the heavy metal is promoted. The atmosphere during heating more preferably contains 15 mass% or less, further preferably 10 mass% or less, further preferably 5 mass% or less, particularly preferably 1 mass% or less of oxygen with respect to components other than water vapor, and may contain 0 mass% of oxygen, that is, may not contain oxygen.

In addition, the atmosphere during heating preferably contains 70 mass% or more of an inert gas with respect to components other than water vapor. That is, the inert gas is preferably contained in an amount of 70 mass% or more when the entire atmosphere in a state in which it is assumed that there is no water vapor in the atmosphere during heating is 100 mass%. Accordingly, the reaction between the heavy metal oxide contained in the glass powder and the reducing agent is promoted, and the vaporization of the heavy metal is promoted. The atmosphere during heating more preferably contains 85 mass% or more, further preferably 90 mass% or more, still further preferably 95 mass% or more, further preferably 98 mass% or more, and particularly preferably 99 mass% or more of the inert gas with respect to components other than water vapor, and may contain 100 mass% of the inert gas. Examples of the inert gas include nitrogen, argon, helium, neon, and xenon, and one or two or more of these may be used. In a case where two or more of these are used, a total thereof preferably satisfies the above range.

For example, in a case where a nitrogen gas is used as the inert gas, the atmosphere during heating preferably contains 70 mass% or more, more preferably 85 mass% or more, further preferably 90 mass% or more, still further preferably 95 mass% or more, further preferably 98 mass% or more, and particularly preferably 99 mass% or more of nitrogen with respect to components other than water vapor, and may contain 100 mass% of nitrogen.

It is more preferable that the atmosphere during heating contains water vapor, has a content of oxygen of 30 mass% or less with respect to components other than water vapor, and has a dew point temperature of 0°C or higher.

The heating step may be performed in one stage or two or more stages. In a case where the heating step is performed in two or more stages, the dew point temperature, a nitrogen concentration, and an oxygen concentration in the atmosphere during heating may or may not be changed for each stage.

A glass to be obtained in a case where the heating step is performed in one stage may be in a state in which a sintered product of the glass obtained by sintering the glass powder and a residue obtained by heating the reducing agent and the like are mixed (hereinafter, the glass to be obtained in the state also referred to as glass sintered product).

In addition, in the case where the heating step is performed in two stages, a glass sintered product in which the heavy metal is vaporized is obtained by heating in the first stage, and then the obtained glass sintered product is heated by heating in the subsequent second stage at a higher temperature than that of the heating in the first stage, whereby a glass may be obtained in which the mixture of the present embodiment, the dried product of the present embodiment, or the resulting mixture of the dried product and the halogenating agent are melted (hereinafter, the glass also referred to as glass melt). That is, since the sintering (first stage) and the melting (second stage) are continuously performed, and the sintered product of the reducing agent and the like obtained by the heating in the first stage is melted by the heating in the second stage, the glass to be obtained becomes the glass melt not containing the sintered product of the reducing agent and the like.

As the heating in the first stage, for example, heating is performed at 700°C to 1,400°C for 0.01 hours to 10 hours, and then as the heating in the second stage, heating may be performed at 1,400°C to 1,700°C for 0.01 hours to 100 hours. However, in a case where the heating in the first stage is performed at 1,400°C, the heating in the second stage is performed at a temperature of higher than 1,400°C. In addition, the heating in the second stage may be performed in a general glass melting furnace.

In a case where a halogenating agent is used in the first or second production method, or in a case where the third production method is adopted, the halogenated heavy metal may be recovered by a scrubber. In particular, the halogenated heavy metal can be dissolved in water by a wet scrubber, and the heavy metal can be used for another application through a step of separating and purifying the heavy metal from the aqueous solution.

As described above, the glass to be obtained may be a glass (glass sintered product) in a state in which the sintered product of the glass obtained by sintering the glass powder by the heating and the residue of the reducing agent or the like are mixed, or may be a glass (glass melt) in a state in which the residue of the reducing agent or the like is not contained. Generally, when the heating is performed at a temperature of higher than 1,400°C, the glass melt in the latter case is obtained.

The glass to be obtained preferably contains, in terms of mass% based on an oxide, 60% to 80% of SiO₂, 5% to 20% of Na₂O, 0% to 15% of MgO, 5% to 20% of CaO, 0% to 10% of Al₂O₃, 0% to 0.15% of a heavy metal oxide (the content of the heavy metal oxide means total amount of Sb₂O₃, PbO, and As₂O₃), and 0% to 3% of a halogen element (the content of the halogen element means total amount of F, Cl, and Br).

A preferable range of the content of each component in the glass to be obtained is the same as the preferable range of the content of each component in the glass powder described above except for the heavy metal oxide and the halogen element.

The content of the heavy metal oxide of the present embodiment in the glass to be obtained, that is, a total content of Sb₂O₃, PbO, and As₂O₃, is preferably 0% to 0.15%. As described above, according to the first and second production methods, the amount of the heavy metal oxide derived from the glass powder is reduced in the glass to be obtained. The content of the heavy metal oxide of the present embodiment in the glass to be obtained is more preferably 0.1% or less, further preferably 0.05% or less, and particularly preferably 0.02% or less. However, the content of the heavy metal oxide is not limited to the above range as long as the content of the heavy metal oxide in the glass to be obtained is reduced with respect to the content of the heavy metal oxide in the glass powder. A ratio of a content of the heavy metal oxide in the glass to be obtained after treatment to a content of the heavy metal oxide in the glass powder before treatment, that is, a rate of change in a total amount of the heavy metal oxide, is preferably 0.8 or less, more preferably 0.5 or less, further preferably 0.3 or less, and particularly preferably 0.1 or less.

The content of the halogen element in the glass to be obtained, that is, a total amount of F, Cl, and Br, is preferably 0% to 3%. The halogen element in the glass to be obtained is derived from the halogenating agent, and when the content of the halogen element is 3% or less, occurrence of foam defects in the glass can be prevented. The content of the halogen element in the glass to be obtained is more preferably 1% or less, further preferably 0.5% or less, and particularly preferably 0.1% or less. In addition, the content of the halogen element may be 0.005% or more, may be 0.02% or more, or may be 0.05% or more.

In the case where the heating step is performed in two stages, that is, in the case where the glass sintered product is obtained by the heating in the first stage, and then the glass melt is obtained by the heating in the second stage, a separate glass raw material can be added to the glass sintered product as necessary in order to adjust the composition of the glass to be obtained at any timing before the heating in the second stage. As the glass raw material to be added, the same glass raw materials as those described in the first and second production methods can be used.

The glass to be obtained may contain, in terms of mass% based on an oxide, 60% to 80% of SiO₂, 5% to 20% of Na₂O, 0% to 15% of MgO, 5% to 20% of CaO, 0% to 10% of Al₂O₃, 0.001% to 0.15% of a heavy metal oxide (the content of the heavy metal oxide means total amount of Sb₂O₃, PbO, and As₂O₃), and 0.005% to 3% of a halogen element (the content of the halogen element means total amount of F, Cl, and Br).

A preferable range of the content of each component in the glass to be obtained is the same as the preferable range of the content of each component in the glass powder described above except for the heavy metal oxide and the halogen element.

The content of the heavy metal oxide of the present embodiment in the glass to be obtained, that is, a total content of Sb₂O₃, PbO, and As₂O₃, is preferably 0.001% to 0.15%. In particular, Sb₂O₃ acts as a refining agent for the glass and also acts to improve the transmittance of the glass, and thus is preferably contained in an amount of 0.001% or more. As described above, according to the first and second production methods, the amount of the heavy metal oxide derived from the glass powder described above is reduced in the glass to be obtained. The content of the heavy metal oxide of the present embodiment in the glass to be obtained is more preferably 0.1% or less, further preferably 0.05% or less, and particularly preferably 0.02% or less. In addition, the content of the heavy metal oxide may be 0.002% or more, or may be 0.005% or more.

A value obtained by dividing the content of the heavy metal oxide of the present embodiment in the glass to be obtained by the content of the heavy metal oxide in the glass powder before the heat treatment is preferably 0.7 or less, more preferably 0.4 or less, further preferably 0.2 or less, and particularly preferably 0.1 or less. However, the content of the heavy metal oxide and the value of the ratio between before and after the heating treatment are not limited to the above ranges, respectively, as long as the content of the heavy metal oxide in the glass to be obtained is reduced with respect to the content of the heavy metal oxide in the glass powder.

The content of the halogen element in the glass to be obtained, that is, the total content of F, Cl, and Br, is preferably 0.005% to 3%. The halogen element in the glass to be obtained is derived from the halogenating agent, and when the content of the halogen element is 3% or less, occurrence of foam defects in the glass can be prevented. The content of the halogen in the glass to be obtained is more preferably 1% or less, further preferably 0.5% or less, and particularly preferably 0.1% or less. In addition, the content of the halogen may be 0.02% or more, or may be 0.05% or more.

In a case where the glass to be obtained contains Sb₂O₃, a Sb-Redox value represented by [Sb³⁺]/([Sb³⁺] + [Sb⁵⁺]), where [Sb³⁺] and [Sb⁵⁺] are content ratios (molar concentrations) of Sb³⁺ and Sb⁵⁺ present in the glass, is preferably 80% to 100%, more preferably 95% to 100%, and further preferably 99% to 100% because the Sb-Redox value is increased by an action of the reducing agent. [Sb³⁺] and [Sb⁵⁺] are respectively molar concentrations of Sb³⁺ and Sb⁵⁺ in the glass.

[Sb³⁺] and ([Sb³⁺] + [Sb⁵⁺]) in the glass to be obtained can be measured by ICP mass spectrometry.

In the case where the mixture of the present embodiment, the dried product of the present embodiment, or the resulting mixture of the dried product and the halogenating agent is heated in two stages, the glass melt in the second stage may be obtained and then formed into a plate-shaped glass. As a method for forming the sheet-shaped glass, a known method in the related art can be adopted, including a float method, a press method, a fusion method, and a down-draw method. The float method is particularly preferable when producing a large glass plate and the like. As a continuous forming method other than the float method, for example, a fusion method and a down-draw method are also preferable.

The present invention is not limited to the above embodiment, and various modifications can be adopted within the scope of the present invention. For example, the present invention is not limited to the embodiment described above, and may be appropriately modified and improved. In addition, the material, shape, size, number, arrangement place, and the like of each component in the above embodiment are optional as long as the present invention can be achieved, and are not limited.

As described above, the following matters are disclosed in the present description.
[1] A method for producing a glass, the method including:
   obtaining a mixture; and
   heating the mixture at a temperature of 700°C or higher, in which
   the mixture contains a glass powder containing at least one heavy metal oxide selected from the group consisting of Sb₂O₃, PbO, and As₂O₃, a reducing agent, and a liquid medium, and
   the reducing agent is dissolved in the liquid medium.
[2] A method for producing a glass, the method including:
   obtaining a mixture;
   drying the mixture to obtain a dried product; and
   heating the dried product at a temperature of 700°C or higher, in which
   the mixture contains a glass powder containing at least one heavy metal oxide selected from the group consisting of Sb₂O₃, PbO, and As₂O₃, a reducing agent, and a liquid medium,
   the reducing agent is dissolved in the liquid medium, and
   the dried product contains the reducing agent and the glass powder containing the heavy metal oxide.
[3] The method for producing a glass according to [1] or [2], in which
   the mixture contains a halogenating agent.
[4] The method for producing a glass according to any one of [1] to [3], in which
   the temperature for the heating is 1,000°C or higher.
[5] A method for producing a glass, the method including:
   obtaining a mixture;
   drying the mixture to obtain a dried product;
   mixing the dried product with a halogenating agent; and
   heating the resulting mixture at a temperature of 700°C or higher, in which
   the mixture contains a glass powder containing at least one heavy metal oxide selected from the group consisting of Sb₂O₃, PbO, and As₂O₃, a reducing agent, and a liquid medium,
   the reducing agent is dissolved in the liquid medium, and
   the dried product contains the reducing agent and the glass powder containing the heavy metal oxide.
[6] The method for producing a glass according to [5], in which
   the temperature for the heating is 1,000°C or higher.
[7] The method for producing a glass according to any one of [1] to [6], in which
   the heating is carried out in an atmosphere that contains water vapor and has a dew point temperature of 0°C or higher.
[8] The method for producing a glass according to any one of [1] to [6], in which
   the heating is carried out in an atmosphere that has a content ratio of oxygen of 30 mass% or less with respect to components other than water vapor.
[9] The method for producing a glass according to any one of [1] to [6], in which
   the heating is carried out in an atmosphere that contains water vapor, has a content ratio of oxygen of 30 mass% or less with respect to components other than the water vapor, and has a dew point temperature of 0°C or higher.
[10] The method for producing a glass according to any one of [1] to [9], in which
   the mixture is obtained by mixing the glass powder containing at least one heavy metal oxide selected from the group consisting of Sb₂O₃, PbO, and As₂O₃, with a reducing agent solution.
[11] The method for producing a glass according to any one of [1] to [10], in which
   the mixture is obtained by mixing the glass material containing at least one heavy metal oxide selected from the group consisting of Sb₂O₃, PbO, and As₂O₃, the reducing agent solution, and the halogenating agent, and then pulverizing the glass material to obtain a glass powder.
[12] The method for producing a glass according to any one of [1] to [11], in which
   the glass powder contains Sb₂O₃ as the heavy metal oxide.
[13] The method for producing a glass according to any one of [1] to [12], in which
   the reducing agent is a water-soluble organic compound.
[14] The method for producing a glass according to any one of [1] to [13], in which
   the liquid medium is water.
[15] The method for producing a glass according to any one of [1] to [14], in which
   the reducing agent is a saccharide.
[16] The method for producing a glass according to any one of [1] to [15], in which
   the glass powder has a median diameter d50 of 100 µm or less.
[17] The method for producing a glass according to any one of [1] to [16], in which
   the halogenating agent is a halogen-containing inorganic compound.
[18] The method for producing a glass according to any one of [1] to [17], in which
   the halogenating agent is at least one selected from the group consisting of CaCl₂, CaCl₂·2H₂O, and NaCl.
[19] The method for producing a glass according to any one of [1] to [18], in which
   at least one of the mixture or the dried product further contains at least one selected from the group consisting of a metal powder containing at least one element selected from the group consisting of Al, Si, Cu, and Fe, a water-insoluble organic powder, and a carbon powder.
[20] The method for producing a glass according to any one of [1] to [19], in which
   at least one of the mixture or the dried product further contains a glass raw material.
[21] The method for producing a glass according to any one of [1] to [20], in which
   the glass powder contains, in terms of mass% based on an oxide;
   SiO₂ : 60% to 80%;
   Na₂O : 5% to 20%;
   MgO : 0% to 15%;
   CaO : 5% to 20%;
   Al₂O₃ : 0% to 10%; and
   the heavy metal oxide : 0.005% to 1%, and
   the content of the heavy metal oxide means a total amount of Sb₂O₃, PbO, and As₂O₃.
[22] The method for producing a glass according to any one of [1] to [21], in which
   a glass to be obtained, contains, in terms of mass% based on an oxide;
   SiO₂ : 60% to 80%;
   Na₂O : 5% to 20%;
   MgO : 0% to 15%;
   CaO : 5% to 20%;
   Al₂O₃ : 0% to 10%;
   the heavy metal oxide : 0% to 0.15%; and
   the halogen element : 0% to 3%,
   the content of the heavy metal oxide means a total amount of Sb₂O₃, PbO, and As₂O₃, and
   the content of the halogen element means a total amount of F, Cl, and Br.
[23] A mixture including:
   a glass powder containing at least one heavy metal oxide selected from the group consisting of Sb₂O₃, PbO, and As₂O₃, a reducing agent, and a liquid medium, in which the reducing agent is dissolved in the liquid medium.
[24] The mixture according to [23], further including:
   a halogenating agent.
[25] A dried product obtained by drying a mixture, in which
   the mixture contains a glass powder containing at least one heavy metal oxide selected from the group consisting of Sb₂O₃, PbO, and As₂O₃, a reducing agent, and a liquid medium, and the reducing agent is dissolved in the liquid medium, and
   the dried product contains the glass powder and the reducing agent.
[26] The dried product according to [25], in which
   the mixture further contains a halogenating agent, and
   the dried product further contains a halogen component derived from the halogenating agent.
[27] A glass, including, in terms of mass% based on an oxide;
   SiO₂: 60% to 80%;
   Na₂O: 5% to 20%;
   MgO: 0% to 15%;
   CaO: 5% to 20%;
   Al₂O₃: 0% to 10%;
   a heavy metal oxide: 0.001% to 0.15%; and
   a halogen element: 0.005% to 3%, in which
   the content of the heavy metal oxide means a total amount of Sb₂O₃, PbO, and As₂O₃, and
   the content of the halogen element means a total amount of F, Cl, and Br.
[28] The glass according to [27], further containing Sb₂O₃, and
   having a Sb-Redox value of 80% to 100%, the Sb-Redox value being represented by [Sb³⁺]/([Sb³⁺] + [Sb⁵⁺]), where [Sb³⁺] represents a molar concentration of Sb³⁺ present in the glass, and [Sb⁵⁺] represents a molar concentration of Sb⁵⁺ present in the glass.

### [Examples]

Hereinafter, the present invention is specifically described with reference to Examples, but the present invention is not limited thereto. Examples 1 to 15 and 19 to 28 are inventive examples, and Examples 16 to 18 are comparative examples.

### (Example 1)

### <Preparation of Mixture>

A glass material (cullet) having a glass composition A (expressed in terms of mass% based on an oxide) shown in Table 1 below was pulverized at 200 rpm for 3 hours by a planetary ball mill (manufactured by Verder Scientific, using a pot and a ball made of zirconia). The median diameter d50 of the glass powder obtained after pulverization was 5.5 µm. The median diameter d50 of the glass powder was measured using a laser diffraction/scattering particle diameter distribution analyzer (SALD-2300 manufactured by Shimadzu Corporation) by a wet method in which the glass powder was dispersed in water, after crushing an aggregated powder by ultrasonic waves.

In Tables 1, 2, 6, and 7, the symbol "-" means that the component was less than a detection limit value.

**[Table 1]**

| Glass composition A (mass%) | |
|---|---|
| SiO₂ | 72.7 |
| Al₂O₃ | 1.3 |
| CaO | 8.4 |
| MgO | 4.2 |
| Na₂O | 13.0 |
| K₂O | 0.1 |
| SO₃ | 0.2 |
| Fe₂O₃ | 0.01 |
| Sb₂O₃ | 0.166 |
| PbO | - |
| As₂O₃ | - |
| Total of heavy metal oxide | 0.166 |

To 100 parts by mass of the obtained glass powder, 16.6 parts by mass of an aqueous solution of a reducing agent (reducing agent solution) in which 50 mass% of sucrose was dissolved and 16.6 parts by mass of an aqueous solution of a halogenating agent (halogenating agent solution) in which 50 mass% of CaBr₂·2H₂O was dissolved were added, and the mixture was placed in a plastic bag and uniformly mixed by hand, then transferred to an alumina crucible, and heated at 1,100°C for 2 hours in an air atmosphere (76 mass% of nitrogen and 23 mass% of oxygen) having a dew point temperature of 10°C.

The obtained glass was pulverized in an agate mortar to obtain a green compact, and Sb₂O₃, PbO, and As₂O₃ were quantified by fluorescent X-ray analysis. Results are shown in Table 3.

Blanks in Tables 3 to 5 indicate that the corresponding component was not added, and the symbol "-" means that the corresponding component was less than a detection limit value.

### (Example 2)

A glass was produced in the same manner as in Example 1 except that a temperature during heating was 1,200°C, and Sb₂O₃, PbO, and As₂O₃ were quantified. Results are shown in Table 3.

### (Example 3)

A glass was produced in the same manner as in Example 1 except that an added amount of the aqueous solution of the halogenating agent was 8.3 parts by mass, and Sb₂O₃, PbO, and As₂O₃ were quantified. Results are shown in Table 3.

### (Example 4)

A glass was produced in the same manner as in Example 1 except that 8.3 parts by mass of CaBr₂·2H₂O powder was used instead of the aqueous solution of the halogenating agent in which 50 mass% of CaBr₂·2H₂O was dissolved, and Sb₂O₃, PbO, and As₂O₃ were quantified. Results are shown in Table 3.

### (Example 5)

A glass was produced in the same manner as in Example 1 except that 12.2 parts by mass of an aqueous solution of a halogenating agent in which 32 mass% of CaCl₂ was dissolved was used instead of the aqueous solution of the halogenating agent in which 50 mass% of CaBr₂·2H₂O was dissolved, and Sb₂O₃, PbO, and As₂O₃ were quantified. Results are shown in Table 3.

### (Example 6)

A glass was produced in the same manner as in Example 5 except that the temperature during heating was 1,300°C, and Sb₂O₃, PbO, and As₂O₃ were quantified. Results are shown in Table 3.

### (Example 7)

A glass (glass sintered product and glass melt) was produced in the same manner as in Example 5 except that heating was performed in two stages in which heating was performed in an air atmosphere (76% of nitrogen and 23 mass% of oxygen) having a dew point temperature of 10°C at 1,300°C for 2 hours, then transferred to a platinum crucible, and heating and melting were further performed in an atmosphere including 95 mass% of nitrogen and 5 mass% of oxygen and having a dew point temperature of 50°C at 1,500°C for 2 hours, and Sb₂O₃, PbO, and As₂O₃ were quantified. Results are shown in Table 3. In addition, results of quantifying a total composition of the finally obtained glass (glass melt) by fluorescent X-ray analysis are shown in Table 7. Further, Sb-Redox of the finally obtained glass (glass melt) measured by ICP mass spectrometry was 100%.

### (Example 8)

A glass was produced in the same manner as in Example 5 except that an added amount of the aqueous solution of the halogenating agent was 5.3 parts by mass, and Sb₂O₃, PbO, and As₂O₃ were quantified. Results are shown in Table 3.

### (Example 9)

A glass was produced in the same manner as in Example 1 except that a pulverization time of the glass material (cullet) was 1 hour and the median diameter d50 of the glass powder obtained after the pulverization was 17.3 µm, and Sb₂O₃, PbO, and As₂O₃ were quantified. Results are shown in Table 3.

### (Example 10)

A glass was produced in the same manner as in Example 1 except that a pulverization time of the glass material (cullet) was 6 hours and the median diameter d50 of the glass powder obtained after the pulverization was 3.8 µm, and Sb₂O₃, PbO, and As₂O₃ were quantified. Results are shown in Table 3.

### (Example 11)

A glass was produced in the same manner as in Example 1 except that a mixture of a glass powder, an aqueous solution of a reducing agent, and an aqueous solution of a halogenating agent was dried at 80°C for 3 hours, and then 8.3 parts by mass of Al (metallic aluminum) powder as insoluble powder was further added with respect to 100 parts by mass of the glass powder, and Sb₂O₃, PbO, and As₂O₃ were quantified. Results are shown in Table 4.

### (Example 12)

A glass was produced in the same manner as in Example 1 except that 5.2 parts by mass of CaCl₂ ·2H₂O powder was used instead of the aqueous solution of the halogenating agent in which 50 mass% of CaBr₂·2H₂O was dissolved, and Sb₂O₃, PbO, and As₂O₃ were quantified. Results are shown in Table 4.

### (Example 13)

A glass was produced in the same manner as in Example 1 except that 16.4 parts by mass of an aqueous solution of a halogenating agent in which 25 mass% of NaCl was dissolved was used instead of the aqueous solution of the halogenating agent in which 50 mass% of CaBr₂·2H₂O was dissolved, and Sb₂O₃, PbO, and As₂O₃ were quantified. Results are shown in Table 4.

### (Example 14)

A glass was produced in the same manner as in Example 5 except that a glass material (cullet) having a glass composition B (expressed in terms of mass% based on an oxide) shown in Table 2 was used instead of the glass material (cullet) having the glass composition A (expressed in terms of mass% based on oxide) shown in Table 1, and Sb₂O₃, PbO, and As₂O₃ were quantified. Results are shown in Table 4.

**[Table 2]**

| Glass composition B (mass%) | |
|---|---|
| SiO₂ | 71.7 |
| Al₂O₃ | 1.0 |
| CaO | 8.5 |
| MgO | 3.4 |
| Na₂O | 15.0 |
| K₂O | - |
| SO₃ | 0.2 |
| Fe₂O₃ | 0.01 |
| Sb₂O₃ | 0.215 |
| PbO | 0.011 |
| As₂O₃ | 0.002 |
| Total of heavy metal oxide | 0.228 |

### (Example 15)

To 100 parts by mass of the glass material (cullet) having the glass composition A (expressed in terms of mass% based on an oxide) shown in Table 1, 24.9 parts by mass of an aqueous solution of a reducing agent (reducing agent solution) in which 50 mass% of sucrose was dissolved was added, and the mixture was pulverized at 200 rpm for 3 hours by a planetary ball mill (manufactured by Verder Scientific, using a pot and a ball made of zirconia). The median diameter d50 of a glass powder obtained after pulverization was 3.7 µm. A mixture of the obtained glass powder and the aqueous solution of the reducing agent was dried at 80°C for 15 hours to obtain a dried product, then the dried product was crushed in an agate mortar, 3.9 parts by mass of CaCl₂ powder was added with respect to 100 parts by mass of the glass powder in the dried product, the mixture was placed in a plastic bag and uniformly mixed by hand, then transferred to an alumina crucible, and heated at 1,100°C for 2 hours in an air atmosphere (76 mass% of nitrogen and 23 mass% of oxygen) having a dew point temperature of 10°C.

The obtained glass was pulverized in an agate mortar to obtain a green compact, and Sb₂O₃, PbO, and As₂O₃ were quantified by fluorescent X-ray analysis. Results are shown in Table 4.

### (Example 16)

A glass was produced in the same manner as in Example 1 except that 8.3 parts by mass of a sucrose powder was used instead of the reducing agent solution in which 50 mass% of sucrose was dissolved in water, and Sb₂O₃, PbO, and As₂O₃ were quantified. Results are shown in Table 4.

### (Example 17)

A glass was produced in the same manner as in Example 11 except that the reducing agent solution in which 50 mass% of sucrose was dissolved in water was not added and the drying step was not performed, and Sb₂O₃, PbO, and As₂O₃ were quantified. Results are shown in Table 4.

### (Example 18)

A glass was produced in the same manner as in Example 17 except that 3.5 parts by mass of a C (carbon) powder, which is an insoluble powder, was added as a reduction promoter instead of the Al powder, which is a metal powder as a reduction promoter, and Sb₂O₃, PbO, and As₂O₃ were quantified. Results are shown in Table 4.

### (Example 19)

A glass was produced in the same manner as in Example 14 except that heating was performed at 1,200°C for 2 hours in an air atmosphere (76 mass% of nitrogen and 23 mass% of oxygen) having a dew point temperature of 60°C, and Sb₂O₃, PbO, and As₂O₃ were quantified. Results are shown in Table 4.

### (Example 20)

A glass was produced in the same manner as in Example 19 except that heating was performed in an atmosphere of 95 mass% including nitrogen and 5 mass% of oxygen and having a dew point temperature of 60°C, and Sb₂O₃, PbO, and As₂O₃ were quantified. Results are shown in Table 4.

### (Example 21)

A glass was produced in the same manner as in Example 13 except that heating was performed in an atmosphere including 95 mass% of nitrogen and 5 mass% of oxygen and having a dew point temperature of 60°C at 1,200°C for 2 hours, and Sb₂O₃, PbO, and As₂O₃ were quantified. Results are shown in Table 5.

### (Example 22)

A glass was produced in the same manner as in Example 20 except that the aqueous solution of the halogenating agent in which 32 mass% of CaCl₂ was dissolved was not added, and Sb₂O₃, PbO, and As₂O₃ were quantified. Results are shown in Table 5.

### (Example 23)

A glass was produced in the same manner as in Example 22 except that heating was performed in an atmosphere including 95 mass% of nitrogen and 5 mass% of oxygen and having a dew point temperature of 60°C at 1,000°C for 2 hours, and Sb₂O₃, PbO, and As₂O₃ were quantified. Results are shown in Table 5.

### (Example 24)

A glass was produced in the same manner as in Example 22 except that heating was performed in an atmosphere including 95 mass% of nitrogen and 5 mass% of oxygen and having a dew point temperature of 10°C at 1,000°C for 2 hours, and Sb₂O₃, PbO, and As₂O₃ were quantified. Results are shown in Table 5.

### (Example 25)

A glass was produced in the same manner as in Example 22 except that heating was performed in an atmosphere including 98 mass% of nitrogen and 2 mass% of oxygen and having a dew point temperature of 60°C at 900°C for 2 hours, and Sb₂O₃, PbO, and As₂O₃ were quantified. Results are shown in Table 5.

### (Example 26)

To 100 parts by mass of a glass material (cullet) having a glass composition C (expressed in terms of mass% based on an oxide) shown in Table 6, 16.6 parts by mass of an aqueous solution of a reducing agent (reducing agent solution) in which 50 mass% of sucrose was dissolved was added, and the mixture was pulverized at 200 rpm for 3 hours by a planetary ball mill (manufactured by Verder Scientific, using a pot and a ball made of zirconia). The median diameter d50 of a glass powder obtained after pulverization was 4.5 µm. A mixture of the obtained glass powder and the aqueous solution of the reducing agent was dried at 80°C for 15 hours to obtain a dried product, then the dried product was crushed in an agate mortar, then transferred to an alumina crucible, and heated at 1,000°C for 2 hours in an atmosphere including 95 mass% of nitrogen and 5 mass% of oxygen and having a dew point temperature of 60°C.

The obtained glass was pulverized in an agate mortar to obtain a green compact, and Sb₂O₃, PbO, and As₂O₃ were quantified by fluorescent X-ray analysis. Results are shown in Table 5.

### (Example 27)

A glass was produced in the same manner as in Example 22 except that a glass material (cullet) having the glass composition C (expressed in terms of mass% based on an oxide) shown in Table 6 was used instead of the glass material (cullet) having the glass composition A (expressed in terms of mass% based on an oxide) shown in Table 1, and that heating was performed at 800°C for 0.4 hours in an atmosphere including 100 mass% of nitrogen and 0 mass% of oxygen and having a dew point temperature of -40°C, and Sb₂O₃, PbO, and As₂O₃ were quantified. Results are shown in Table 5.

### (Example 28)

A glass was produced in the same manner as in Example 27 except that a mixture of a glass powder and an aqueous solution of a reducing agent was dried at 80°C for 3 hours, and that heating was performed in an atmosphere including 100 mass% of nitrogen and 0 mass% of oxygen and having a dew point temperature of -40°C at 1,000°C for 0.4 hours, and Sb₂O₃, PbO, and As₂O₃ were quantified. Results are shown in Table 5.

**[Table 3]**

| | | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Glass composition | | | - | A | A | A | A | A | A | A | A | A | A |
| Glass powder | | | parts by mass | 100 | 100 | 100 | 100 | 100 | 100 | 100 | 100 | 100 | 100 |
| Additive before pulverization | Reducing agent | 50 mass% of sucrose aqueous solution | parts by mass | | | | | | | | | | |
| Pulverization time | | | hr | 3 | 3 | 3 | 3 | 3 | 3 | 3 | 3 | 1 | 6 |
| d50 of glass powder | | | µm | 5.5 | 5.5 | 5.5 | 5.5 | 5.5 | 5.5 | 5.5 | 5.5 | 17.3 | 3.8 |
| | Aqueous solution of reducing agent | 50 mass% of sucrose aqueous solution | parts by mass | 16.6 | 16.6 | 16.6 | 16.6 | 16.6 | 16.6 | 16.6 | 16.6 | 16.6 | 16.6 |
| | Aqueous solution of halogenating agent | 50 mass% of CaBr₂·2H₂O aqueous solution | parts by mass | 16.6 | 16.6 | 8.3 | | | | | | 16.6 | 16.6 |
| Additive after pulverization | Aqueous solution of halogenating agent | 32 mass% of CaCl₂ aqueous solution | parts by mass | | | | | 12.2 | 12.2 | 12.2 | 5.3 | | |
| | Aqueous solution of halogenating agent | 25 mass% of NaCl aqueous solution | parts by mass | | | | | | | | | | |
| | Reducing agent | Sucrose powder | parts by mass | | | | | | | | | | |
| | Halogenating agent | CaBr₂·2H₂O powder | parts by mass | | | | 8.3 | | | | | | |
| | Halogenating agent | CaCl₂ powder | parts by mass | | | | | | | | | | |
| | Halogenating agent | CaCl₂·2H₂O powder | parts by mass | | | | | | | | | | |
| | Insoluble powder | Al powder | parts by mass | | | | | | | | | | |
| | Insoluble powder | C powder | parts by mass | | | | | | | | | | |
| Content of reducing agent | | | parts by mass | 8.3 | 8.3 | 8.3 | 8.3 | 8.3 | 8.3 | 8.3 | 8.3 | 8.3 | 8.3 |
| Content of liquid medium | | | parts by mass | 16.6 | 16.6 | 20.8 | 8.3 | 16.6 | 16.6 | 16.6 | 11.9 | 16.6 | 16.6 |
| Drying | | | - | No | No | No | No | No | No | No | No | No | No |
| Heating atmosphere | | | - | Air | Air | Air | Air | Air | Air | First stage: air | Air | Air | Air |
| | | | | | | | | | | Second stage: 95% of nitrogen and 5% of oxygen | | | |
| Dew point temperature of atmosphere during heating | | | °C | 10 | 10 | 10 | 10 | 10 | 10 | First stage: 10 | 10 | 10 | 10 |
| | | | | | | | | | | Second stage: 50 | | | |
| Heating temperature | | | °C | 1,100 | 1,200 | 1,100 | 1,100 | 1,100 | 1,300 | First stage: 1,300 | 1,100 | 1,100 | 1,100 |
| | | | | | | | | | | Second stage: 1,500 | | | |
| Heating time | | | hr | 2 | 2 | 2 | 2 | 2 | 2 | First stage: 2 | 2 | 2 | 2 |
| | | | | | | | | | | Second stage: 2 | | | |
| Sb₂O₃ | | | mass% | 0.069 | 0.058 | 0.089 | 0.059 | 0.064 | 0.049 | 0.029 | 0.109 | 0.111 | 0.096 |
| PbO | | | mass% | - | - | - | - | - | - | - | - | - | - |
| As₂O₃ | | | mass% | - | - | - | - | - | - | - | - | - | - |
| Total of heavy metal oxide | | | mass% | 0.069 | 0.058 | 0.089 | 0.059 | 0.064 | 0.049 | 0.029 | 0.109 | 0.111 | 0.096 |
| Rate of change in total amount of heavy metal oxide (after treatment/before treatment) | | | - | 0.42 | 0.35 | 0.54 | 0.36 | 0.39 | 0.30 | 0.17 | 0.66 | 0.67 | 0.58 |

**[Table 4]**

| | | | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|---|
| Glass composition | | | - | A | A | A | B | A | A | A | A | A | A |
| Glass powder | | | parts by mass | 100 | 100 | 100 | 100 | 100 | 100 | 100 | 100 | 100 | 100 |
| Additive before pulverization | Reducing agent | 50 mass% of sucrose aqueous solution | parts by mass | | | | | 24.9 | | | | | |
| Pulverization time | | | hr | 3 | 3 | 3 | 3 | 3 | 3 | 3 | 3 | 3 | 3 |
| d50 of glass powder | | | µm | 5.5 | 5.5 | 5.5 | 5.5 | 3.7 | 5.5 | 5.5 | 5.5 | 5.5 | 5.5 |
| | Aqueous solution of reducing aaent | 50 mass% of sucrose aqueous solution | parts by mass | 16.6 | 16.6 | 16.6 | 16.6 | | | | | 16.6 | 16.6 |
| | Aqueous solution of halogenating aaent | 50 mass% of CaBr₂·2H₂O aqueous solution | parts by mass | 16.6 | | | | | 16.6 | 16.6 | 16.6 | | |
| | Aqueous solution of halogenating aaent | 32 mass% of CaCl₂ aqueous solution | parts by mass | | | | 12.2 | | | | | 12.2 | 12.2 |
| | Aqueous solution of halogenating aaent | 25 mass% of NaCl aqueous solution | parts by mass | | | 16.4 | | | | | | | |
| Additive after pulverization | Reducing agent | Sucrose powder | parts by mass | | | | | | 8.3 | | | | |
| | Halogenating agent | CaBr₂·2H₂O powder | parts by mass | | | | | | | | | | |
| | Halogenating agent | CaCl₂ powder | parts by mass | | | | | 3.9 | | | | | |
| | Halogenating agent | CaCl₂·2H₂O powder | parts by mass | | 5.2 | | | | | | | | |
| | Insoluble powder | Al powder | parts by mass | 8.3 | | | | | | 8.3 | | | |
| | Insoluble powder | C powder | parts by mass | | | | | | | | 3.5 | | |
| Content of reducing agent | | | parts by mass | 8.3 | 8.3 | 8.3 | 8.3 | 12.5 | 8.3 | 0 | 0 | 8.3 | 8.3 |
| Content of liquid medium | | | parts by mass | Before drying: 16.6 | 8.3 | 20.6 | 16.6 | Before drying: 12.5 | 8.3 | 8.3 | 8.3 | 16.6 | 16.6 |
| | | | | After drying: almost 0 | | | | After drying: almost 0 | | | | | |
| Drying | | | - | Yes at 80°C for 3 hours | No | No | No | Yes at 80°C for 15 hours | No | No | No | No | No |
| Heating atmosphere | | | - | Air | Air | Air | Air | Air | Air | Air | Air | Air | 95% of nitrogen and 5% of oxygen |
| Dew point temperature of atmosphere during heating | | | °C | 10 | 10 | 10 | 10 | 10 | 10 | 10 | 10 | 60 | 60 |
| Heating temperature | | | °C | 1,100 | 1,100 | 1,100 | 1,100 | 1,100 | 1,100 | 1,100 | 1,100 | 1,200 | 1,200 |
| Heating time | | | hr | 2 | 2 | 2 | 2 | 2 | 2 | 2 | 2 | 2 | 2 |
| Sb₂O₃ | | | mass% | 0.052 | 0.075 | 0.105 | 0.062 | 0.063 | 0.161 | 0.167 | 0.166 | 0.067 | 0.011 |
| PbO | | | mass% | - | - | - | 0.005 | - | - | - | - | - | - |
| As₂O₃ | | | mass% | - | - | - | - | - | - | - | - | - | - |
| Total of heavy metal oxide | | | mass% | 0.052 | 0.075 | 0.105 | 0.067 | 0.063 | 0.161 | 0.167 | 0.166 | 0.041 | 0.011 |
| Rate of change in total amount of heavy metal oxide (after treatment/before treatment) | | | - | 0.31 | 0.45 | 0.63 | 0.29 | 0.38 | 0.97 | 1.01 | 1.00 | 0.25 | 0.07 |

**[Table 5]**

| | | | | Ex. 21 | Ex. 22 | Ex. 23 | Ex. 24 | Ex. 25 | Ex. 26 | Ex. 27 | Ex. 28 |
|---|---|---|---|---|---|---|---|---|---|---|---|
| Glass composition | | | - | A | A | A | A | A | C | C | C |
| Glass powder | | | parts by mass | 100 | 100 | 100 | 100 | 100 | 100 | 100 | 100 |
| Additive before pulverization | Reducing agent | 50 mass% of sucrose aqueous solution | parts by mass | | | | | | 16.6 | | |
| Pulverization time | | | hr | 3 | 3 | 3 | 3 | 3 | 3 | 3 | 3 |
| d50 of glass powder | | | um | 5.5 | 5.5 | 5.5 | 5.5 | 5.5 | 4.5 | 5.5 | 5.5 |
| | Aqueous solution of reducing agent | 50 mass% of sucrose aqueous solution | parts by mass | 16.6 | 16.6 | 16.6 | 16.6 | 16.6 | | 16.6 | 16.6 |
| | Aqueous solution of halogenating agent | 50 mass% of CaBr₂·2H₂O aqueous solution | parts by mass | | | | | | | | |
| | Aqueous solution of halogenating agent | 32 mass% of CaCl₂ aqueous solution | parts by mass | | | | | | | | |
| Additive after pulverization | Aqueous solution of halogenating agent | 25 mass% of NaCl aqueous solution | parts by mass | 16.4 | | | | | | | |
| | Reducing agent | Sucrose powder | parts by mass | | | | | | | | |
| | Halogenating agent | CaBr₂·2H₂O powder | parts by mass | | | | | | | | |
| | Halogenating agent | CaCl₂ powder | parts by mass | | | | | | | | |
| | Halogenating agent | CaCl₂·2H₂O powder | parts by mass | | | | | | | | |
| | Insoluble powder | Al powder | parts by mass | | | | | | | | |
| | Insoluble powder | C powder | parts by mass | | | | | | | | |
| Content of reducing agent | | | parts by mass | 8.3 | 8.3 | 8.3 | 8.3 | 8.3 | 8.3 | 8.3 | 8.3 |
| Content of liquid medium | | | parts by mass | 20.6 | 8.3 | 8.3 | 8.3 | 8.3 | Before drying: 8.3 | 8.3 | Before drying: 8.3 |
| | | | | | | | | | After drying: almost 0 | | |
| | | | | | | | | | | | After drying: almost 0 |
| Drying | | | - | No | No | No | No | No | Yes at 80°C for 15 hours | No | Yes at 80°C for 3 hours |
| Heating atmosphere | | | - | 95% of nitrogen and 5% of oxyaen | 95% of nitrogen and 5% of oxyaen | 95% of nitrogen and 5% of oxyaen | 95% of nitrogen and 5% of oxyaen | 98% of nitrogen and 2% of oxyaen | 95% of nitrogen and 5% of oxyaen | 100% of nitrogen and 0% of oxyaen | 100% of nitrogen and 0% of oxyaen |
| Dew point temperature of atmosphere during heating | | | °C | 60 | 60 | 60 | 10 | 60 | 60 | -40 | -40 |
| Heating temperature | | | °C | 1,200 | 1,200 | 1,000 | 1,000 | 900 | 1,000 | 800 | 1,000 |
| Heating time | | | hr | 2 | 2 | 2 | 2 | 2 | 2 | 0.4 | 0.4 |
| Sb₂O₃ | | | mass% | 0.012 | 0.017 | 0.037 | 0.083 | 0.111 | 0.070 | 0.209 | 0.113 |
| PbO | | | mass% | - | - | - | - | - | - | - | - |
| As₂O₃ | | | mass% | - | - | - | - | - | - | - | - |
| Total of heavy metal oxide | | | mass% | 0.012 | 0.017 | 0.037 | 0.083 | 0.111 | 0.070 | 0.144 | 0.113 |
| Rate of change in total amount of heavy metal oxide (after treatment/before treatment) | | | - | 0.07 | 0.10 | 0.22 | 0.5 | 0.67 | 0.12 | 0.24 | 0.19 |

**[Table 6]**

| Glass composition C (mass%) | |
|---|---|
| SiO₂ | 73.3 |
| Al₂O₃ | 1.3 |
| CaO | 7.9 |
| MgO | 3.5 |
| Na₂O | 13.1 |
| K₂O | 0.1 |
| SO₃ | 0.2 |
| Fe₂O₃ | 0.01 |
| Sb₂O₃ | 0.602 |
| PbO | - |
| As₂O₃ | - |
| Total of heavy metal oxide | 0.602 |

**[Table 7]**

| | (mass%) |
|---|---|
| SiO₂ | 70.5 |
| Al₂O₃ | 1.3 |
| CaO | 10.6 |
| MgO | 3.3 |
| Na₂O | 12.5 |
| K₂O | - |
| SO₃ | 0.1 |
| ZrO₂ | 0.8 |
| Cl | 0.9 |
| Fe₂O₃ | 0.01 |
| Sb₂O₃ | 0.029 |
| PbO | - |
| As₂O₃ | - |
| Total of heavy metal oxide | 0.029 |

According to the results of Tables 3 to 5, since a mixture (Examples 1 to 10, 12 to 14, 19 to 25, and 27) that contained a reducing agent, water as a liquid medium, and a glass powder containing a heavy metal oxide, in which the reducing agent was dissolved in water as a liquid medium, a dried product (Examples 11, 26, and 28) of the mixture, or a resulting mixture (Example 15) obtained by mixing a halide and a dried product obtained by drying the mixture that contained the reducing agent, water as the liquid medium, and the glass powder containing the heavy metal oxide, in which the reducing agent was dissolved in water as a liquid medium, was heated at 700°C or higher, a content of the heavy metal oxide in the obtained glass could be reduced to 0.15 mass% or less. In addition, in Examples 4, 12, and 15, a powder was used as the halogenating agent, but good results were obtained similarly to the case where an aqueous solution was used as the halogenating agent (Examples 1 to 3, 5 to 11, 13, 14, and 19 to 21). This is considered to be because the halogenating agent is easily dissolved in the glass regardless of its form, or because the halogenating agent acts as a halogen gas at the time of heating, so that the form at the time of addition is irrelevant.

In addition, in the glass (glass sintered product and glass melt) obtained by the two-stage heating of Example 7, the content of the heavy metal oxide could be reduced to 0.15 mass% or less, and the rate of change of the total amount of the heavy metal oxide could be 0.7 or less. Note that ZrO₂, which is not contained in the glass material (cullet) used, is detected due to an instrument (pot and ball made of zirconia) used at the time of pulverization. In addition, the content of CaO is increased due to the halogenating agent (CaCl₂) used.

In Examples 19 to 23, 25, and 26, since the dew point temperature in the atmosphere during heating was as high as 60°C, the content of the heavy metal oxide in the obtained glass could be reduced to a lower level. In addition, in Examples 20 to 28, since the oxygen concentration in the atmosphere during heating was as low as 5 mass% or less, the content of the heavy metal oxide in the obtained glass could be reduced to a lower level. This is considered to be because, since the oxygen concentration in the atmosphere during heating was lowered, the vaporization of the halogenated heavy metal was promoted.

On the other hand, in Examples 16, 17, and 18, powders were used as the reducing agent or the reduction promoter, and the reducing agent or the reduction promoter was not dissolved in the liquid medium in the mixture, so that contents of Sb₂O₃ as the heavy metal oxide in the glass obtained after heating were as high as 0.161 mass%, 0.167 mass%, and 0.166 mass%, respectively. This is considered to be because, since the reducing agent or the reduction promoter is not dissolved in the liquid medium in the mixture, the reducing agent or the reduction promoter is not substantially uniformly present over the entire surface of the glass powder, and the heavy metal oxide contained in the glass powder was not efficiently reacted with the reducing agent or the reduction promoter in the heating step. In the mixture of Example 16, an aqueous solution was used as the halogenating agent, and the reducing agent was water-soluble, but since the aqueous solution dispersed in the entire mixture was dilute with respect to the reducing agent powder, the reducing agent was not dissolved in the liquid medium in the mixture. In the mixtures of Examples 17 and 18, an aqueous solution was used as the halogenating agent, but since the reduction promoter was not water-soluble, the reduction promoter was not dissolved in the liquid medium in the mixture.

A halogenating agent was not essential for the mixture or dried product, and even when a mixture or dried product not containing a halogenating agent was used, by using a mixture in which a reducing agent was dissolved in a liquid medium or a dried product thereof and performing heating at a temperature of 700°C or higher, the content of the heavy metal oxide in the obtained glass could be reduced to 0.15 mass% or less, and the rate of change in the total amount of the heavy metal oxide could be 0.7 or less. (Examples 22 to 28).

Although the present invention has been described in detail with reference to specific embodiments, it is apparent to those skilled in the art that various changes and modifications can be made without departing from the spirit and scope of the present invention. The present application is based on a Japanese Patent Application (No. 2023-146355) filed on September 8, 2023, and a Japanese Patent Application (No. 2023-202908) filed on November 30, 2023, the contents of which are incorporated herein by reference.

## Claims

1. A method for producing a glass, the method comprising:
obtaining a mixture; and
heating the mixture at a temperature of 700°C or higher, wherein
the mixture comprises a glass powder comprising at least one heavy metal oxide selected from the group consisting of Sb₂O₃, PbO, and As₂O₃, a reducing agent, and a liquid medium, and
the reducing agent is dissolved in the liquid medium.

2. A method for producing a glass, the method comprising:
obtaining a mixture;
drying the mixture to obtain a dried product; and
heating the dried product at a temperature of 700°C or higher, wherein
the mixture comprises a glass powder comprising at least one heavy metal oxide selected from the group consisting of Sb₂O₃, PbO, and As₂O₃, a reducing agent, and a liquid medium,
the reducing agent is dissolved in the liquid medium, and
the dried product comprises the reducing agent and the glass powder comprising the heavy metal oxide.

3. The method for producing a glass according to claim 1 or 2, wherein
the mixture comprises a halogenating agent.

4. The method for producing a glass according to claim 3, wherein
the temperature for the heating is 1,000°C or higher.

5. A method for producing a glass, the method comprising:
obtaining a mixture;
drying the mixture to obtain a dried product;
mixing the dried product with a halogenating agent; and
heating the resulting mixture at a temperature of 700°C or higher, wherein
the mixture comprises a glass powder comprising at least one heavy metal oxide selected from the group consisting of Sb₂O₃, PbO, and As₂O₃, a reducing agent, and a liquid medium,
the reducing agent is dissolved in the liquid medium, and
the dried product comprises the reducing agent and the glass powder comprising the heavy metal oxide.

6. The method for producing a glass according to claim 5, wherein
the temperature for the heating is 1,000°C or higher.

7. The method for producing a glass according to any one of claims 1, 2, and 5, wherein
the heating is carried out in an atmosphere that comprises water vapor and has a dew point temperature of 0°C or higher.

8. The method for producing a glass according to any one of claims 1, 2, and 5, wherein
the heating is carried out in an atmosphere that has a content ratio of oxygen of 30 mass% or less with respect to components other than water vapor.

9. The method for producing a glass according to any one of claims 1, 2, and 5, wherein
the heating is carried out in an atmosphere that comprises water vapor, has a content ratio of oxygen of 30 mass% or less with respect to components other than the water vapor, and has a dew point temperature of 0°C or higher.

10. The method for producing a glass according to any one of claims 1, 2, and 5, wherein
the mixture is obtained by mixing the glass powder comprising at least one heavy metal oxide selected from the group consisting of Sb₂O₃, PbO, and As₂O₃, with a reducing agent solution.

11. The method for producing a glass according to any one of claims 1, 2, and 5, wherein
the mixture is obtained by mixing a glass material comprising at least one heavy metal oxide selected from the group consisting of Sb₂O₃, PbO, and As₂O₃ with a reducing agent solution, and then pulverizing the glass material into a glass powder.

12. The method for producing a glass according to any one of claims 1, 2, and 5, wherein
the glass powder comprises Sb₂O₃ as the heavy metal oxide.

13. The method for producing a glass according to any one of claims 1, 2, and 5, wherein
the reducing agent is a water-soluble organic compound.

14. The method for producing a glass according to any one of claims 1, 2, and 5, wherein
the liquid medium is water.

15. The method for producing a glass according to any one of claims 1, 2, and 5, wherein
the reducing agent is a saccharide.

16. The method for producing a glass according to any one of claims 1, 2, and 5, wherein
the glass powder has a median diameter d50 of 100 µm or less.

17. The method for producing a glass according to claim 3, wherein
the halogenating agent is at least one selected from the group consisting of CaCl₂, CaCl₂·2H₂O, and NaCl.

18. The method for producing a glass according to claim 5 or 6, wherein
the halogenating agent is at least one selected from the group consisting of CaCl₂, CaCl₂·2H₂O, and NaCl.

19. The method for producing a glass according to any one of claims 1, 2, and 5, wherein
at least one of the mixture or the dried product further comprises at least one selected from the group consisting of a metal powder comprising at least one element selected from the group consisting of Al, Si, Cu, and Fe, a water-insoluble organic powder, and a carbon powder.

20. The method for producing a glass according to any one of claims 1, 2, and 5, wherein
at least one of the mixture or the dried product further comprises a glass raw material.

21. The method for producing a glass according to any one of claims 1, 2, and 5, wherein
the glass powder comprises, in terms of mass% based on an oxide;
SiO₂ : 60% to 80%;
Na₂O : 5% to 20%;
MgO : 0% to 15%;
CaO : 5% to 20%;
Al₂O₃ : 0% to 10%; and
the heavy metal oxide : 0.005% to 1%, and
the content of the heavy metal oxide means a total amount of Sb₂O₃, PbO, and As₂O₃.

22. The method for producing a glass according to any one of claims 1, 2, and 5, wherein
a glass to be obtained, comprises, in terms of mass% based on an oxide;
SiO₂ : 60% to 80%;
Na₂O : 5% to 20%;
MgO : 0% to 15%;
CaO : 5% to 20%;
Al₂O₃ : 0% to 10%;
the heavy metal oxide : 0% to 0.15%; and
the halogen element : 0% to 3%,
the content of the heavy metal oxide means a total amount of Sb₂O₃, PbO, and As₂O₃, and
the content of the halogen element means a total amount of F, Cl, and Br.

23. A mixture comprising:
a glass powder comprising at least one heavy metal oxide selected from the group consisting of Sb₂O₃, PbO, and As₂O₃;
a reducing agent; and
a liquid medium, wherein
the reducing agent is dissolved in the liquid medium.

24. The mixture according to claim 23, further comprising:
a halogenating agent.

25. A dried product obtained by drying a mixture, wherein
the mixture comprises a glass powder comprising at least one heavy metal oxide selected from the group consisting of Sb₂O₃, PbO, and As₂O₃, a reducing agent, and a liquid medium, and the reducing agent is dissolved in the liquid medium, and
the dried product comprises the glass powder and the reducing agent.

26. The dried product according to claim 25, wherein
the mixture further comprises a halogenating agent, and
the dried product further comprises a halogen component derived from the halogenating agent.

27. A glass, comprising, in terms of mass% based on an oxide;
SiO₂: 60% to 80%;
Na₂O: 5% to 20%;
MgO: 0% to 15%;
CaO: 5% to 20%;
Al₂O₃: 0% to 10%;
a heavy metal oxide: 0.001% to 0.15%; and
a halogen element: 0.005% to 3%, wherein
the content of the heavy metal oxide means a total amount of Sb₂O₃, PbO, and As₂O₃, and
the content of the halogen element means a total amount of F, Cl, and Br.

28. The glass according to claim 27, further comprising Sb₂O₃, and
having a Sb-Redox value of 80% to 100%, the Sb-Redox value being represented by [Sb³⁺]/([Sb³⁺] + [Sb⁵⁺]), where [Sb³⁺] represents a molar concentration of Sb³⁺ present in the glass, and [Sb⁵⁺] represents a molar concentration of Sb⁵⁺ present in the glass.
